# EUROPÄISCHE PATENTSCHRIFT

(11) **EP 2 125 910 B1**
(45) Veröffentlichungstag und Bekanntmachung des Hinweises auf die Patenterteilung: **02.03.2011**
(21) Anmeldenummer: 07866251.7
(22) Anmeldetag: 21.12.2007
(51) Int. Cl.: C08F 8/32, C08F 8/40, C08G 81/02, C09B 67/00, C08F 212/08, C08F 222/08, C09D 17/00, C09C 1/24, C09C 3/10

(54) **MODIFIZIERTE STYROL / MALEINSÄUREANHYDRID BASIERTE KAMMCOPOLYMERE**
MODIFIED STYRENE / MALEIC ANHYDRIDE BASED COMB COPOLYMERS
COPOLYMÈRES EN PEIGNE MODIFIÉS À BASE DE STYRÈNE ET ANHYDRIDE MALÈIQUE

(30) Priorität: 27.12.2006 DE 102006062441
(43) Veröffentlichungstag der Anmeldung: 02.12.2009
(73) Patentinhaber: BYK-Chemie GmbH, 46483 Wesel (DE)
(72) Erfinder: GÖBELT, Bernd, 46487 Wesel (DE); OMEIS, Jürgen, 46286 Dorsten-Lembeck (DE); NAGELSDIECK, René, 46537 Dinslaken (DE); JOHANN, Sabine, 46047 Oberhausen (DE)
(74) Vertreter: Kutzenberger, Helga
(86) Internationale Anmeldenummer: PCT/EP2007/011329
(87) Internationale Veröffentlichungsnummer: WO 2008/080580

(56) Entgegenhaltungen:
- EP-A- 1 026 178
- EP-A- 1 142 972
- WO-A-02/051948
- WO-A-2007/039603
- CN-A- 1 420 135
- FENG-PO TSENG ET AL: "Compatibilization of PS and PA6 Blends by Means of Poly(oxyalkylene)amine Modified Styrene-Maleic Anhydride Copolymer" JOURNAL OF POLYMER RESEARCH, KLUWER ACADEMIC PUBLISHERS-CONSULTANTS BUREAU, NE, Bd. 12, Nr. 6, 1. Dezember 2005 (2005-12-01), Seiten 439-447, XP019251080 ISSN: 1572-8935

## Beschreibung

Die vorliegende Erfindung betrifft modifizierte Kammcopolymere umfassend die Struktureinheiten gemäß Anspruchsfassung, deren Herstellung durch Umsetzung von SMA-Harzen und gegebenenfalls speziellen Copolymerisaten mit einer Mischung aus wenigstens einem Polyalkylenoxidmonoamin und wenigstens einem Aminoalkohol, mit einer Mischung aus wenigstens einem Polyalkylenoxidmonoamin und wenigstens einem N,N-disubstituierten Diamin oder einer Mischung aus wenigstens einem Polyalkylenoxidmonoamin, wenigstens einem N,N-disubstituierten Diamin und wenigstens einem Polymeren ausgewählt aus der Gruppe bestehend aus monohydroxyterminierten Polyalkylenoxiden, monohydroxyterminierten Polyestern und monohydroxyterminierten Blockcopolymeren aus Polyalkylenoxid- und Polyester-Blöcken, deren anschließende, zumindest teilweise Umsetzung der monohydroxyterminierten Seitenketten zu Phosphorsäuresestem bzw. der N,N-disubstituierten aminotermierten Seitenketten zu quartären Ammoniumsalzen und deren Verwendung als Netz- und Dispergiermittel.

Es ist bekannt, dass eine Vielzahl von Kammcopolymeren als Netz- und Dispergiermittel verwendet werden können, die aber entsprechend ihrem Aufbau entweder nur in einem wässrigen System oder in einem organischen, lösungsmittelhaltigen System mit der gewünschten Wirkung eingesetzt werden können.

So sind aus dem Stand der Technik bereits Kammcopolymeren bekannt, deren Löslichkeitseigenschaften über die Wahl der Comonomeren in den Seitenketten so eingestellt werden können, dass entweder die Löslichkeit in einer wässrigen oder in einem organischen, lösungsmittelhaltigen Milieu gegeben ist. So werden in US-B-6,472,463 oder DE-C-60 016 758 Kammcopolymere beschrieben, deren Seitenketten aus Polyacrylaten oder Polyestern bestehen und mit Phosphorsäureestergruppen, Amingruppen, Salzen von Aminen oder quartären Ammonlumsalzen als Endgruppen modifiziert sind und deren Löslichkeit entweder in Wasser oder in einem organischen Lösungsmittel über die Wahl der Comonomeren in den Seitenketten eingestellt werden kann. Eine Löslichkeit sowohl in einem wässrigen Medium als auch in einem organischen Lösungsmittel läßt sich hiermit aber nur unzureichend einstellen, so dass der Einsatz solcher Kammcopolymeren als Netz- und Dispergiermittel, z. B. bei Farbfilterherstellungen zu zu langen Verarbeitungszeiten führt.

Kammcopolymere auf Basis von Styrol/Maleinsäureanhydrid-Harzen (SMA-Harzen), die Polyetherseitenketten aufweisen, werden als Vermittleradditiv für Polystyrol und PA6 Mischungen beschrieben (vgl. Journal of Polymer Research (2005) 12: 439-447).

Weiterhin sind solche Kammpolymere als antistatisches Material mit geringer elektrischer Leitfähigkeit bekannt (CN 1420135 A).

Kammcopolymere auf Basis von Styrol/Maleinsäureanhydrid-Harzen (SMA-Harzen), die Polyetherseitenketten aber keine Haftgruppen aufweisen, werden in US-B-6,406,143 oder in US-B-6,528,593 beschrieben. Diese Dispergiermittel haben den Nachteil, dass sie organische Pigmente in lösungsmittelhaltigen Formulierungen nur ungenügend stabilisieren können.

Die in US-B-6,423,785 offenbarte Verwendung von Kammcopolymeren auf Basis von SMA-Harzen, die Polyetherseitenketten tragen und mit Aminoxidgruppen modifiziert sein können, als Netz- und Dispergiermittel genügt nicht immer den Anforderungen an eine lagerstabile Dispersion von Pigmenten.

Dies gilt auch für den Einsatz von Kammcopolymeren auf Basis von SMA-Harzen, die Polyetherseitenketten und Aminogruppen aufweisen können, die mit ungesättigten Carbonsäuren zu Salzen umgesetzt sind (vgl. US-B-7,078,464), da die beschriebenen Haftgruppen nicht für alle Anwendungsbereiche geeignete Haftgruppen darstellen. Bei einem Einsatz als Netz- und Dispergiermittel kommt noch hinzu, dass durch die Versalzung mit einer ungesättigten Carbonsäure die Gefahr einer Polymerisation und damit einer unerwünschten Vernetzung des Netz- bzw. Dispergiermittel bei der Lagerung gegeben ist.

Gegenüber dem Stand der Technik bestand daher ein Bedarf, Netz- und Dispergiermittel zur Verfügung zu stellen, die neben einer ausgezeichneten Stabilisierung von Feststoffdispersionen, insbesondere Pigmentdispersionen, eine ausgezeichnete Löslichkeit sowohl in wässrigen Medien als auch in organischen Medien aufweisen, um den gestiegenen Anforderungen an Netz- und Dispergiermittel in vielen Anwendungsfeldern, wie Universaltönpasten, Pigmentoberflächenmodifizierung zur Herstellung leichter verarbeitbaren Pigmenten oder Color Resists für Farbfilter zu genügen. Insbesondere bei diesen Anwendungen wird auch eine sehr niedrige Viskosität des pigmentierten Lackes gefordert, was überlicherweise nur mit einem Netz- und Dispergiermittel mit einer außerordentlich guten Stabilisierung der Pigmentdispersion auch bei Lagerung erreicht werden kann.

Aufgabe der vorliegenden Erfindung war es daher, Kammcopolymere zur Verfügung zu stellen, die in wässrigen Medien als auch in organischen Medien sehr gut löslich sind und mit denen als Netz- und Dispergiermittel niedrigviskose und lagerstabile Feststoffdispersionen erhalten werden.

Diese Aufgabe wird durch das zur Verfügung stellen der erfindungsgemäßen Kammcopolymeren basierend auf wenigstens einem Copolymerisat aus ggf. substituierten
Styrol- und Maleinsäureanhydrid-Einheiten gelöst, die die nachstehend aufgeführten Kombinationen der folgenden Struktureinheiten I bis X aufweisen: 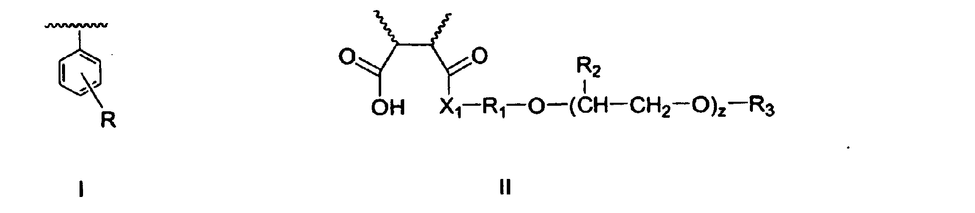 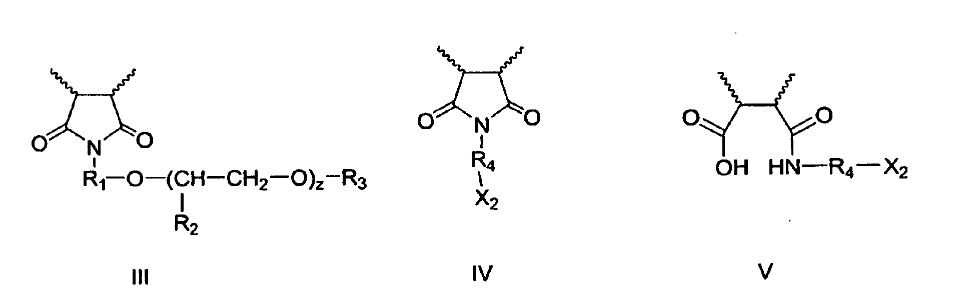 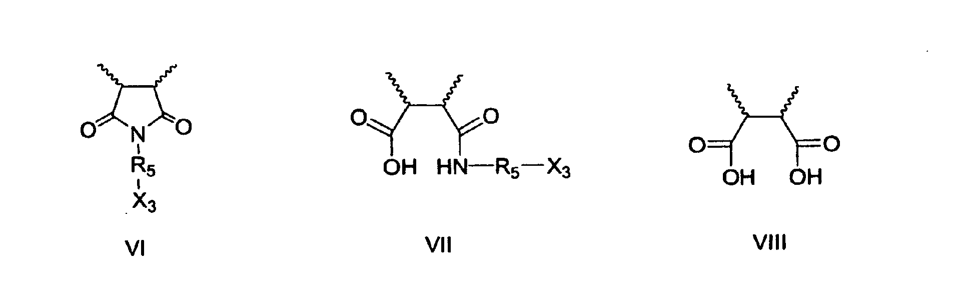 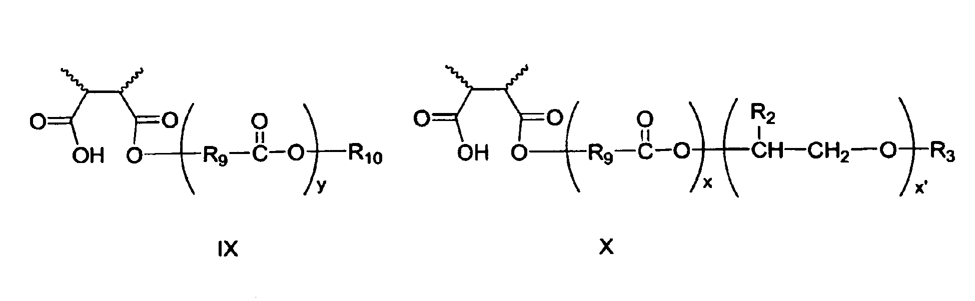 worin
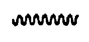 für die Kettenverknüfung,
R für H, Halogen, vorzugsweise Chlor, eine Nitrogruppe, eine Alkylgruppe mit 1 bis 15 C-Atomen oder eine Arylgruppe mit 6 bis 18 C-Atomen,
R₁ für eine Alkylengruppe mit 1 bis 24 C-Atomen oder eine substituierte oder unsubstituierte Arylengruppe mit 6 bis 18 C-Atomen,
R₂ für H oder eine Alkylgruppe, vorzugsweise für H oder CH₃, wobei 0 bis 95 %, vorzugsweise 30 bis 70 % von R₂ die Bedeutung einer Alkylgruppe, vorzugsweise einer Methylgruppe haben,
z für eine ganze Zahl von 3 bis 70,
X₁ für NH und/oder O,
R₃ für eine ggf. substituierte, ggf. einfach oder mehrfach ungesättigte Alkylgruppe mit 1 bis 30 C-Atomen, eine ggf. substituierte Arylgruppe mit von 6 bis 18 C-Atomen, eine ggf. substituierte Cycloalkylgruppe mit 4 bis 10 C-Atomen,
R₄ und R₅, gleich oder verschieden, für eine ggf. substituierte Alkylengruppe mit 1 bis 15 C-Atomen, eine ggf. substituierte Cycloalkylengruppe mit 4 bis 10 C-Atomen oder eine substituierte oder unsubstituierte Arylengruppe mit 6 bis 18 C-Atomen,
X₂ für eine Phosphorsäureestergruppe oder eine Hydroxylgruppe steht, wobei mindestens 25% von X₂ für eine Phosphorsäureestergruppe stehen,
X₃ für eine N,N-disubstituierte Aminogruppe der allgemeinen Formel A, 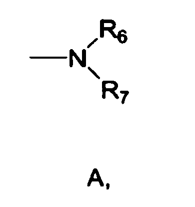 oder eine quartäre Ammoniumgruppe der allgemeinen Formel B, 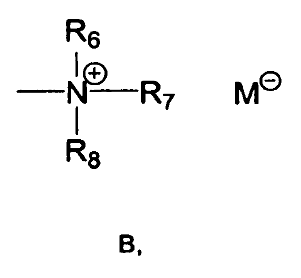 stehen, wobei
- Me^{Θ}: für einen Carbonsäurerest, der nicht ethylenisch ungesättigt ist, einen Sulfatrest oder ein Halogenid, vorzugsweise ein Chlorid, Bromid oder Jodid steht,
- R₆, R₇, R₈,: gleich oder verschieden, für eine Alkylgruppe mit 1 bis 15 C- Atomen, eine Cycloalkylgruppe mit 6 bis 10 C-Atomen oder eine substituierte oder unsubstituierte Arylgruppe mit 6 bis 18 C-Atomen, vorzugsweise für eine Methyl-, Ethyl- oder Benzyl-Gruppe,
wobei mindestens 25% von X₃ für eine quartäre Ammoniumgruppe der allgemeinen Formel B, stehen
und
- R₉: für einen ggf. substituierten Alkylenrest mit 2 bis 15 C-Atomen, einen ggf. substituierten Cycloalkylenrest mit 6 bis 10 C-Atomen und/oder für einen ggf. substituierte Arylenrest mit 6 bis 18 C-Atomen,
- R₁₀: für einen ggf. substituierten Alkylrest mit 1 bis 30 C-Atomen, der ggf. einfach oder mehrfach ungesättigten sein kann, und/oder einen ggf. substituierten Arylrest
- x: für eine ganze Zahl von 1 bis 70
- x': für eine ganze Zahl von 3 bis 70
- y: für eine ganze Zahl von 1 bis 70
stehen,
wobei das Kammcopolymer entweder eine
1. Kombination aus den Struktureinheiten I bis V und VIII, wobei X₁ in der Struktureinheit II nur für eine NH-Gruppe steht,
   eine
2. Kombination aus den Struktureinheiten I bis III und VI bis VIII,
   oder eine
3. Kombination aus den Struktureinheiten I bis III und VI bis VIII und der Struktureinheit IX und/oder X,
   aufweist,
   und ggf. im Gemisch mit wenigstens einem weiteren Kammcopolymeren basierend auf einer AB-Blockcopolymerstruktur aus einem A-Block, der aus ggf. substituierten Styrol und Maleinsäureanhydrid aufgebaut ist, und einem B-Block, der aus ggf. substituierten Styrol und/oder (Meth)acrylat-Monomeren aufgebaut ist,
   vorliegt und dessen Maleinsäureanhydridgruppen bis zumindest 70 % als Struktureinheiten in einer der folgenden Kombinationen vorliegen:
   eine
4. Kombination aus den Struktureinheiten II bis V und VIII, wobei X₁ in der Struktureinheit 11 nur für eine NH-Gruppe steht,
   eine
5. Kombination aus den Struktureinheiten II bis III und VI bis VIII
   oder eine
6. Kombination aus den Struktureinheiten II bis III und VI bis VIII und der Struktureinheit IX und/oder X.

Die Mischung aus erfindungsgemäßen Kammcopolymeren und Kammcopolymeren basierend auf einer vorstehend aufgeführten AB-Blockcopolymerstruktur wird im folgenden als Kammcopolymermischung bezeichnet.

Die erfindungsgemäßen Kammcopolymeren oder Kammcopolymermischung weisen in den angegebenen Kombinationen der Struktureinheiten bevorzugt Struktureinheiten auf, in denen
- R: H ist,
- R₁: eine Alkylengruppe mit 1 bis 6 C-Atomen ist,
- R₂: H oder CH₃ ist,
wobei das Molverhältnis von Ethylenoxid-Einheiten zu Propylenoxid-Einheiten in der Struktureinheit 11 und der Struktureinheit III im Bereich von 30:70 bis 70:30 liegt,
- X₂: zumindest zu 50 % eine Phosphorsäureestergruppe ist,
- R₃: eine Alkylgruppe mit 1 bis 8 C-Atomen oder eine gegebenenfalls substituierte Arylgruppe mit 6 C-Atomen ist,
- R₄: eine Alkylengruppe mit 1 bis 8 C-Atomen ist,
- R₅: eine Alkylengruppe mit 1 bis 8 C-Atomen ist,
- X₃: bis zu 100 % als ein Rest der allgemeinen Formel B, vorliegt
- R₆, R₇,: R₈, gleich oder verschieden, eine gegebenenfalls substituierte Alkylgruppe mit 1 bis 8 C-Atomen, bevorzugt Methyl-, Ethyl- oder Benzyl-Rest ist,
- R₉: eine gegebenenfalls substituierte Alkylengruppe mit 3 bis 8 C-Atomen ist,
- R₁₀: ein gegebenenfalls substituierter Alkylenrest mit 4 bis 20 C-Atomen ist,
- z: eine ganze Zahl von 5 bis 60 ist,
- y: eine ganze Zahl von 2 bis 60 ist,
- x: eine ganze Zahl von 2 bis 60 ist,
- x': eine ganze Zahl von 5 bis 60 ist,
wobei das Mol-Verhältnis der Struktureinheiten II, III und IX und/oder X zu den Struktureinheiten VI und VII im Bereich von 25:75 bis 75:25 liegt.

Ganz bevorzugt haben die angegebenen Struktureinheiten I bis X folgenden Aufbau:
R=H,
   - R₁: ein Ethylen-, Propylen- oder Isopropylen-Rest,
   - R₂: H oder ein CH₃-Rest,
wobei das Molverhältnis von Ethylenoxid-Einheiten zu Propylenoxid-Einheiten 70:30 bis 30:70 beträgt,
   - R₃: ein CH₃- oder C₄H₉-Rest,
   - z: eine ganze Zahl von 25 bis 50,
   - X₁: NH und/oder O
   - R₄, R₅,: gleich oder verschieden, ein Alkyl-Rest mit 2 - 4 C-Atomen,
   - R₆, R₇, R₈,: gleich oder verschieden, ein CH₃-, C₂H₅- oder Benzyl-Rest mit Me Chlorid oder Bromid,
   - R₉: ein Alkylen-Rest mit 4 und/oder 5 C-Atomen,
   - R₁₀: ein Alkyl-Rest mit 4 -20 C-Atomen,
   - x: eine ganze Zahl von 4 bis 30,
   - x': eine ganze Zahl von 25 bis 50 und
   - y: eine ganze Zahl von 4 bis 30

Die erfindungsgemäßen Kammcopolymeren oder Kammcopolymermischungen sind erhältlich
a) durch Umsetzung von wenigstens einem ggf. substituierten Styrol/Mateinsäureanhydrid Copolymerisat (SMA Harz) gegebenenfalls im Gemisch mit wenigstens einem weiteren Copolymeren basierend auf einer AB-Blockcopolymerstruktur aus wenigstens einem A-Block, der aus ggf. substituierten Styrol und Maleinsäureanhydrid aufgebaut ist, und einem B-Block, der aus ggf. substituierten Styrol und/oder (Meth)acrylat-Monomeren aufgebaut ist,
   mit
a1) einer Mischung aus wenigstens einem eine primäre Aminoendgruppe aufweisenden Polyalkylenoxidmonoamin und wenigstens einem Aminoalkohol
   oder
a2) einer Mischung aus wenigstens einen eine primäre Aminoendgruppe aufweisenden Polyalkylenoxidmonoamin und wenigstens einem N,N-disubstituierten Diamin
   oder
a3) einer Mischung aus a2) und wenigstens einem Polymeren ausgewählt aus der Gruppe bestehend aus monohydroxyterminierten Polyalkylenoxiden, monohydroxyterminierten Polyester und monohydroxyterminierten Polyester-Polyalkylenoxid-Blockcopolymeren,
   und
b) einer anschließenden, zumindest teilweisen Umsetzung
b1) der freien Hydroxylgruppen des nach a1) erhaltenen Kammcopolymeren oder der Kammcopolymermischung zu Phosphorsäureestergruppen
   oder
b2) der freien N,N-disubstituierten Aminogruppen des nach a2) oder a3) erhaltenen Kammcopolymeren oder der Kammcopolymermischung mit mindestens einer Alkylierungsverbindung zu quartären Ammoniumgruppen.

Die bei der Umsetzung als Basis Copolymere verwendeten SMA-Harze sind Styrol-Maleinsäureanhydrid-Copolymerisate, wobei das Styrol gegebenenfalls mit Alkylgruppen mit 1 bis 15 C-Atomen, wie Methyl, mit Arylgruppen mit 6 bis 18 C-Atomen, Halogen, vorzugsweise Chlor, oder wenigstens einer Nitrogruppe substituiert sein kann. Vorzugsweise liegt das Molverhältnis von ggf. substituierten Styrol- zu Maleinsäureanhydrid-Einheiten bei 1:1 bis 8:1. Besonderes bevorzugt ist ein Molverhältnis von 1:1 bis 2:1, um eine hohe Dichte an Seitenketten und Haftgruppen zu realisieren. Das zahlengemittelte Molekulargewicht der verwendeten SMA-Harze liegt vorzugsweise zwischen 1000 g/mol und 20 004 g/mol (bestimmt mit GPC).

Erfindungsgemäß wird unter dem "S" des Begriffs SMA-Harz sowohl ein substituiertes als auch ein unsubstituiertes Styrol verstanden. Die SMA-Harze können einen statistischen, alternierenden, gradientenartigen oder blockartigen Aufbau aufweisen. Sie können über radikalisch initiierte Polymerisation z. B. mit Hilfe von Azo- oder Peroxidinitiatoren hergestellt werden. Um ein gewünschtes Molekulargewicht einzustellen, können Kettenregler wie zum Beispiel Thiole, sekundäre Alkohole oder Alkylhalogenide wie Tetrachlorkohlenstoff während der Polymerisation zugegeben werden. Kontrollierte radikalische Polymerisationsverfahren, die zur Herstellung von SMA-Harzen geeignet sind, werden in den folgenden Publikationen beschrieben, deren entsprechende Offenbarung hiermit als Teil der Offenbarung der vorliegenden Anmeldung eingeführt wird:
"Reversible Addition Fragmentation Chain Transfer Process" (RAFT), der bei Verwendung bestimmter Polymerisationsregler auch "MADIX" and Addition Fragmentation Chain Transfer" genannt und erfindungsgemäß nur als RAFT bezeichnet wird und z. B. in Polym. Int. 2000, 49, 993, Aust. J. Chem 2005, 58. 379. J: Polym. Sci. Part A: Polym. Chem. 2005,43, 5347. US 6 291 620, WO 98/01478, WO 98/58974 und WO 99/31144 offenbart ist, oder
die kontrollierte Polymerisation mit Nitroxylverbindungen als Polymerisationsregler (NMP), die beispielsweise in Chem. Rev. 2001, 101, 3661 offenbart ist. Die vorteilhafte Mitverwendung von aromatischen Comonomeren wie Styrol zur Herstellung von Netz- und Dispergiermittel auf der Basis von Anhydrid-haltigen Polymeren wurde bereits in US 4 597 794 beschrieben.

Als Polyalkylenoxidmonoamine zur Herstellung der erfindungsgemäßen Kammcopolymeren oder der Kammcopolymermischungen werden vorzugsweise C₁-C₄-Alkoholgestartete Polyether, die aus Ethylenoxid- und Propylenoxid-Einheiten aufgebaut sind und eine primäre Aminogruppe als Endgruppe tragen, verwendet. Das Gewichtsverhältnis von Ethylenoxid- zu Propylenoxid-Einheiten sollte vorzugsweise zwischen 5:95 und 100:0, besonders bevorzugt zwischen 30:70 und 70:30, liegen. Das zahlengemittelte Molekulargewicht der Polyalkylenoxidmonoamine liegt vorzugsweise zwischen 500 g/mol und 3000 g/mol (bestimmt über Aminzahl oder ¹H-NMR-Spektroskopie).

Gegebenfalls können zusätzlich zu den Polyalkylenoxidmonoaminen von 0 mol-% bis 80 mol% bezogen auf die Polyalkylenoxidmonoamine, monohydroxyterminierte Polyether, monohydroxyterminierte Polyester und/oder monohydroxyterminierte Polyether-Polyester-Blockcopolymere eingesetzt werden.

Das Gewichtsverhältnis von Ethylenoxid- zu Propylenoxid-Einheiten der monohydroxyterminierten Polyetherkomponente liegt vorzugsweise zwischen 0:100 und 100:0, besonders bevorzugt zwischen 30:70 und 70:30. Das zahlengemittelte Molekulargewicht liegt zwischen 200 g/mol und 3000 g/mol (gemessen durch ¹H-NMR-Spektroskopie)

Die monohydroxyterminiertem Polyester und monohydroxyterminierten Polyether-Polyester-Blockcopolymere sind solche, die durch Polymerisation einer oder mehrerer, gegebenenfalls alkylsubstituierter Hydroxycarbonsäuren und/oder deren Lactone wie zum Beispiel Propiolacton, Valerolacton, Caprolacton mittels einer Monohydroxy-Startkomponente, wie in EP-A-154 678 (US-A-4 647 647) beschrieben, erhalten werden können. Bevorzugt besitzen diese ein zahlenmittleres Molekulargewicht Mn von 150 bis 5000 g/mol (bestimmt über OH-Zahl oder ¹H-NMR-Spektroskopie). Die als Startkomponente verwendeten monofunktionellen Alkohole beweisen vorzugsweise 1 bis 30, besonders bevorzugt 4 bis 14 Kohlenstoffatome auf. Beispielhaft können n-Butanol, längerkettige, gesättigte und ungesättigte Alkohole wie Propargylalkohol, Oleylalkohol, Linoleylalkohol, Oxoalkohole, Cyclohexanol, Phenylethanol, Neopentylalkohol aber auch fluorierte Alkohole aufgeführt werden. Es können auch Alkohole der zuvor beschriebenen Art bzw. substituierte und unsubstituierte Phenole durch Alkoxylierung nach bekannten Verfahren mit Ethylenoxid und/oder Propylenoxid in Polyoxyalkylenmonoalkyl-, Polyoxyalkylenmonoaryl-, Polyoxyalkylenmonoaralkyl- bzw. Polyoxyalkylenmonocycloalkylether überführt werden und diese Hydroxypolyether als Startkomponente für die Lactonpolymerisation eingesetzt werden. Jeweils können auch Gemische von vorgenannten Verbindungen eingesetzt werden. Die Lactonpolymerisation wird in bekannter Weise mit z. B. p-Toluolsulfonsäure oder Dibutylzinndilaurat initiiert und bei Temperaturen von etwa 70° C bis 180°C durchgeführt. Besonders bevorzugt sind Polyester auf ε-Caprolacton-Basis, gegebenenfalls in Kombination mit δ-Valerolacton.

Als Aminoalkohole werden vorzugsweise aliphatische, cycloaliphatische oder aromatische Kohlenwasserstoffverbindungen, die eine primäre Aminofunktion tragen und eine Hydroxylgruppe aufweisen, verwendet. Bevorzugt werden Aminoalkohole mit einer gegebenenfalls substituierten Alkylengruppe mit 1 bis 15 C-Atomen mit einer ggf. substituierten Cycloalkylengruppe mit 4 bis 10 C-Atomen oder eine gegebenenfalls substituierte Arylengruppe mit 6 bis 18 C-Atomen eingesetzt. Besonders bevorzugt werden kurzkettig, aliphatische Aminoalkanole wie 2-Aminoethanol und 3-Aminopropanol verwendet.

Sofern die freien Hydroxylfunktionen des Kammcopolymeren zu Phosphorsäureestem umgesetzt werden, werden die üblichen Phosphorylierungsmittel wie Polyphosphorsäure oder Phosphorylchlorid verwendet.

Die zum Einsatz kommenden N,N-disubstituierte Diamine besitzen vorzugsweise die allgemeine Struktur 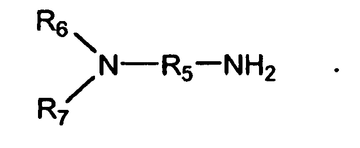 in der R₅ für einen aliphatischen, cycloaliphatischen oder aromatischen Kohlenwasserstoffrest, vorzugsweise für eine ggf. substituierte Alkylengruppe mit 1 bis 15 C-Atomen, eine ggf. substituierte Cycloalkylengruppe mit 4 bis 10 C-Atomen oder eine substituierte oder unsubstituierte Arylengruppe mit 6 bis 18 C-Atomen, besonders bevorzugt für einen Methylen-, Ethylen-, Propylen-, Butylen-, Hexylen-, Cyclohexylen-, Benzylen- oder Phenylenrest, ganz besonders bevorzugt für einen Ethylen-, Propylen- und/oder Butylen-Rest, stehen.

Die Amino-Substituenten R₆ und R₇, gleich oder verschieden, können für einen aliphtischen, cycloaliphatischen oder aromatischen Kohlenwasserstoffrest, bevorzugt für eine Alkylgruppe mit 1 bis 15 C-Atomen, eine Cycloalkylgruppe mit 6 bis 10 C-Atomen oder eine substituierte oder nichtsubstituierte Arylgruppe mit 6 bis 18 C-Atomen, besonders bevorzugt für einen Methyl-, Ethyl-, Propyl-, 2-Ethylhexyl, Cyclohexyl, Benzyl- oder Phenylrest, ganz besonders bevorzugt für einen Methyl- oder Ethylrest stehen. Ganz besonders bevorzugt werden daher als N,N-disubstituierte Diamine N,N-Dialkylaminoalkylamine wie N,N-Dimethylaminoethylamin, N,N-Dimethylaminopropylamin, N,N-Diethylaminoethylamin und/oder N,N-Diethylaminopropylamin eingesetzt. Sofern die N,N-disubstituierten Aminogruppen der Kammcopolymere der allgemeinen Formel A, mit einem Alkylierungsmittel zu quartären Ammoniumgruppen der allgemeinen Formel B, umgesetzt werden, so hat R₈, gleich oder verschieden von R₆ bzw. R₇, die Bedeutung, die die für die Reste R₆ und R₇ vorstehend angegeben wurde. Die Umsetzung zu quartären Ammoniumgruppen der allgemeinen Formel B, kann mit Hilfe von Alkylierungsmittel nach bekannten Methoden erfolgen, wobei als Alkylierungsmittel vorzugsweise Alkylhalogenide wie C₁-C₁₅Alkylchloride, - bromide oder - jodide, besonders bevorzugt Methyljodid, Ethyljodid, Ethylbromid und/oder Benzylchlorid verwendet wird. Die Quaternisierung kann auch mit Hilfe von Oxiranen und gesättigten Carbonsäuren erfolgen.

Weiterhin können die SMA-Harze in Mischung mit wenigstens einem weiteren Copolymeren basierend auf einer AB-Blockcopolystruktur eingesetzt werden, das aus einem Block A aus einem Copolymeren aus gegebenenfalls substituierten Styrol- und Maleinsäureanhydrid-Einheiten und aus einem Block B aus einem (Co)polymeren aus ggf. substituierten Styrol und/oder wenigstens einem (Meht)acrylat-Monomeren aufgebaut sein.

Beispiele für (Meth)acrylate sind Aryl- oder Alkyl-Acrylate bzw. Methacrylate wie Alkyl(meth)acrylate von geradkettigen, verzweigten oder cycloaliphatischen Alkoholen mit 1 bis 22 Kohlenstoffatomen, wie zum Beispiel Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Cyclohexyl(meth)acrylat, Isobomyl(meth)acrylat, Arylalkyl(meth)acrylate, wie Benzylmethacrylat, oder Phenylacrylate, wobei die Arylreste jeweils unsubstituiert oder bis zu vierfach substituiert sein können, wie zum Beispiel 4-Nitrophenylmethacrylat: (Meth)acrylate von halogenierten Alkoholen, wie zum Beispiel Perfluoralkyl(meth)acrylate mit 6 bis 20 Kohlenstoffatomen.
Diese Copolymerisate basierend auf AB-Blockcopolymerstrukturen können, wie vorstehend beschrieben, durch RAFT oder NMP Polymerisation erhalten werden.

Das Gewichtsverhältnis der A- zu den B-Blöcken liegt vorzugsweise im Bereich von 95:5 bis 5:95, besonders bevorzugt von 90:10 bis 10:90.

Die erfindungsgemäßen Kammcopolymere oder die Kammcopolymermischungen sind vorzugsweise dadurch erhältlich, dass zunächst wenigstens ein SMA-Harz und ggf. wenigstens ein vorstehend beschriebenes weiteres Copolymeres in einem geeigneten Lösungsmittel angelöst wird. Hierzu wird eine Mischung aus wenigstens einem Polyalkylenoxidmonoamin und wenigstens einem Aminoalkohol oder einen Mischung aus wenigstens einem Polyalkylenoxidmonoamin gegebenenfalls gemischt mit wenigstens einem der vorstehend beschriebenen monohydroxyterminierten Polyether, Polyester und/oder Polyether-/ Polyesterblockcopolymeren und wenigstens einem N,N-disubstituierten Diamin zugegeben und vorzugsweise bei Temperaturen von 20°C bis 200°C, besonders bevorzugt 30°C bis 170°C, soweit umsetzt, dass vorzugsweise mindestens 70% der Anhydridstrukturen des jeweiligen Basiscopolymerisats bzw. Basiscopolymeren mit Blockcostruktur umgesetzt werden. Hierbei reagieren die primären Aminogruppen mit den Anhydridstrukturen dieser Copolymere zu Amiden und/oder Imiden, wobei bei niedrigen Reaktionstemperaturen die Amidbildung und mit steigender Reaktionstemperatur die Imidbildung begünstigt wird. So werden bei Reaktionstemperaturen von 20°C bis 50°C fast ausschließlich Amidverknüpfungen gebildet, während bei Temperaturen über 140°C die Imidbildung favorisiert wird. Da bei der Imidbildung Wasser freigesetzt wird, können weitere Anhydridstrukturen der Basis(block)copolymerisate zu Carbonsäurefunktionen umgesetzt werden. Bei jeder dieser Umsetzungen kann das anfänglich zugegebene Lösungsmittel wieder abdestilliert werden, um ggf. auch das durch die Imidbildung anfallende Wasser durch azeotrope Destillation zu entfernen.

Die Mitverwendung eines Lösungsmittels für die Basis(block)copolymerisate bei der Umsetzung mit den Aminkomponenten und ggf. vorhandenen monohydroxyterminierten Komponenten gewährleistet, dass sämtliche Anhydridgruppen der Basis(block)copolymerisate weitgehend gleichwertig bereits ab Beginn der Umsetzung reagieren können. Dadurch wird ein homogeneres Produkt erhalten.

Das Mol-Verhältnis der Polyalkylenoxidmonoamin-Komponente und der ggf. vorhandenen monohydroxyterminierten Polyether-,
Polyester/Polyetherblockcopolymer- und/oder Polyester-Komponente zu der Aminoalkohol-Komponente bzw. zu der N,N-disubstituierten Diamin-Komponente liegt vorzugsweise im Bereich von 25:75 bis 75:25.

Die OH-Funktionen der im Fall der Umsetzung mit einem Aminoalkohol zunächst erhaltenen Kammcopolymeren werden in einer weiteren Umsetzung partiell oder vollständig zu Phosphorsäureestergruppen umgesetzt. Dazu können z. B. P₂O₅ Polyphosphorsäure oder Phosphorylchlorid verwendet werden. Der Umsetzungsgrad der Alkoholfunktion sollte mindestens 25 %, vorzugsweise mindestens 50 % betragen.

Werden N,N-disubstituierte Diamine als Aminkomponente bei der Herstellung der erfindungsgemäßen Kammcopolymeren oder der Kammcopolymermischungen mitverwendet, so werden in einer anschließenden Alkylierungsreaktion die tertiären Aminofunktionen partiell oder vollständig zu quartären Ammoniumsalzen umgesetzt. Zur Alkylierung können die üblichen Alkylierungsmittel wie zum Beispiel Benzylchlorid, Methyljodid oder eine Kombination von Oxiranen wie tert.-Butylphenylglycidylether oder Styroloxid mit nicht ethylenisch ungesättigte Carbonsäuren verwendet werden. Der Umsetzungsgrad der tert. Aminofunktionen zu quartären Ammoniumsalzen sollte mindestens 25%, vorzugsweise mindestens 50 % betragen, wobei als Gegenionen vorzugsweise Carbonsäurereste, die nicht ethylenisch ungesättigt sind, Sulfatreste oder Halogenide wie Chloride, Bromide, Jodide vorliegen können.

Erfindungsgemäß wird unter einem Kammcopolymeren bzw. einem Kammblock(co)polymeren bzw. einem Kamm(co)polymeren mit Blockcostruktur ein Polymeres verstanden, dessen Copolymeres bzw. Block(co)polymeres bzw. Copolymeres mit AB-Blockstruktur als Basispolymeres über Ester-, Amid- und/oder Imid-Bindungen mit linearen, polymeren Seitenketten verbunden sind.

Die erfindungsgemäßen Kammcopolymeren oder die Kammcopolymermischungen eignen sich als Netz- und Dispergiermittel für alle aus dem Stand der Technik bekannten Einsatzzwecke. So können diese z. B. bei der Herstellung oder Verarbeitung von Lacken, Druckfarben, Tinten für inkjet-Verfahren wie für Tintenstrahldrucker, Papierstrich, Leder- und Textilfarben, Pasten, Pigmentkonzentraten, Keramiken, kosmetischen Zubereitungen eingesetzt werden, vorzugsweise immer dann, wenn Feststoffe wie Pigmente und/oder Füllstoffe vorhanden sind. Auch bei der Herstellung oder Verarbeitung von Gieß- und/oder Formmassen auf Basis von synthetischen, halbsynthetischen oder natürlichen Polymeren wie zum Beispiel Polyvinylchloriden, gesättigten oder ungesättigten Polyester, Polyurethanen, Polystyrolen, Polyacrylaten, Polyamiden, Epoxidharzen, Polyolefinen wie Polyethylenen oder Polypropylenen können die erfindungsgemäßen Kammcopolymeren oder die Kammcopolymermischungen eingesetzt werden. Beispielsweise lassen sich die erfindungsgemäßen Kammcopolymeren bei der Herstellung von Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings, Maler- und Bautenlacken verwenden, wobei ggf. übliche Hilfsstoffe wie Bindemittel und/oder Lösungsmittel, Pigmente und gegebenenfalls Füllstoffe den erfindungsgemäßen Kammcopolymeren bzw. deren Gemisch mit Kammblock(co)polymeren hinzu gemischt werden.

Beispiele für übliche Bindemittel sind Harze auf Basis von Polyurethanen, Cellulosenitraten, Celluloseacetobutyraten, Alkyd, Melamin, Polyester, Chlorkautschuk, Epoxid und Acrylat.

Als Netz- und Dispergiermittel eigenen sich die erfindungsgemäßen Kammcopolymeren oder die erfindungsgemäßen Kammcopolymermischungen auch für die Herstellung von Beschichtungen auf Wasserbasis, wie kathodischen oder anodischen Elektrotauchlackierungen beispielsweise für Automobilkarossen. Weitere Beispiele für einen Einsatz als Dispergiermittel sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen.

Die erfindungsgemäßen Kammcopolymere oder die Kammcopolymermischungen der 4., 5. und/oder 6. Kombination von Struktureinheiten eignen sich insbesondere auch zur Herstellung von Feststoffkonzentraten, vorzugsweise von Pigmentkonzentraten. Dazu werden diese einem Trägermedium wie organischen Lösungsmitteln, Weichmachern und/oder Wasser vorgelegt, und die zu dispergierenden Feststoffe unter Rühren zugegeben. Zusätzlich können diese Konzentrate Bindemittel und/oder andere Hilfsstoffe enthalten. Mit den erfindungsgemäßen Kammcopolymeren bzw. den erfindungsgemäßen Kammcopolymermischungen ist aber auch in vorteilhafter Weise möglich, stabile bindemittelfreie Pigmentkonzentrate herzustellen. Ebenso ist es möglich, mit den erfindungsgemäßen Kammcopolymeren bzw. den erfindungsgemäßen Kammcopolymermischungen fließfähige Pigmentkonzentrate aus Pigmentpresskuchen herzustellen. Hierbei wird dem Presskuchen, der noch Wasser enthalten kann, ein erfindungsgemäßes Kammcopolymeres oder dessen vorstehend aufgeführtes Gemisch zugemischt und die so erhaltene Mischung dispergiert. Solche Feststoffkonzentrate, vorzugsweise Pigmentkonzentrate, können dann in unterschiedliche Substrate wie z. B. Alkydharze, Polyesterharze, Acrylatharze, Polyurethanharze oder Epoxidharze eingearbeitet werden. Pigmente, die lösungsmittelfrei direkt in den erfindungsgemäßen Kammcopolymeren oder den vorstehend aufgeführten Kammcopolymermischungen dispergiert sind, eignen sich besonders zur Pigmentierung von thermoplastischen und duroplastischen Kunststoffformulierungen.

Die erfindungsgemäßen Kammcopolymere bzw. die vorstehend aufgeführten, erfindungsgemäßen Kammcopolymermischungen können vorteilhaft auch bei der Herstellung von Tinten für "non impact"-Druckverfahren wie "thermal inkjet" und dem "Bubblejet-Verfahren" verwendet werden. Diese Tinten können beispielsweise wässrige Tintenformulierungen, lösemittelbasierte Tintenformulierungen, lösemittelfreie oder -arme Tinten für UV-Applikationen als auch wachsartige Tinten sein.

Die erfindungsgemäßen Kammcopolymere oder die vorstehend aufgeführten, erfindungsgemäßen Kammcopolymermischungen können auf Grund ihrer vorteilhaften Dispergiereigenschaften auch bei der Herstellung von Farbfiltern,-lacken und deren Verwendung zur Herstellung von Farbfiltern für Flüssigkristall-Anzeigen, Flüssigkristallbildschirmen, Farbauflösungsgeräte, Sensoren, Plasmabildschirme, Anzeigen auf Basis der SED (Surface conduction Electron emitter Display) und für MLCC (Multi Layer Ceramic Compounds) eingesetzt werden, die bei der Herstellung von Mikrochips und Leiterplatten verwendet wird. Hierbei kann der flüssige Farbfilterlack, der auch Color Resist genannt wird, durch verschiedenste Applikationsverfahren wie Spin Coating, Aufrakeln, Kombination beider oder über "non impact"-Druckverfahren wie zum Beispiel inkjet-Verfahren aufgetragen werden.
Insbesondere bei diesen Einsatzgebieten ist es wichtig, dass die erfindungsgemäßen Netz- und Dispergierungsmittel sowohl in wässrigen Medien als auch in organischen Lösungsmittel ausreichend und rasch löslich sind.

Die erfindungsgemäßen Kammcopolymere oder die vorstehend aufgeführten, erfindungsgemäßen Kammcopolymermischungen können auch bei der Herstellung kosmetischer Zubereitungen wie zur Herstellung von Make-up, Puder, Lippenstiften, Haarfärbemitteln, Cremen, Nagellacken und Sonnenschutzpräparaten verwendet werden. Diese können in den üblichen Formulierungen wie als W/O- oder O/W-Emulsionen, Lösungen, Gele, Cremes, Lotionen oder Sprays, vorliegen. Die erfindungsgemäßen Kammcopolymeren oder die vorstehend aufgeführten, erfindungsgemäßen Kammcopolymermischungen können dabei in den zur Herstellung dieser Zubereitungen verwendeten Dispersionen bereits als Dispersionsmittel eingesetzt werden. Diese Dispersionen können die üblichen kosmetischen Trägermedien, wie zum Beispiel Wasser, Ricinusöle oder Silikonöle und Feststoffe, wie zum Beispiel organische und anorganische Pigmente wie Titandioxid oder Eisenoxid aufweisen.

Ein weiterer Gegenstand der vorliegenden Erfindung ist auch die Verwendung der erfindungsgemäßen Kammcopolymeren oder der vorstehend aufgeführten, erfindungsgemäßen Kammcopolymermischungen als Netz- und Dispergiermittel. Vorzugsweise werden diese Netz- und Dispergiermittel für die vorstehend beschriebenen Einsatzzwecke verwendet.

Ein weiterer Einsatzzweck ist auch die Herstellung eines pigmentierten Überzuges auf einem Substrat, wobei der Pigmentlack auf das Substrat aufgebracht, und der aufgebrachte Pigmentlack eingebrannt oder ausgehärtet bzw. vernetzt wird.

Für die Einsatzzwecke der erfindungsgemäßen Kammcopolymere oder der vorstehend beschriebenen Kammcopolymermischungen können diese ggf. zusammen mit nach dem Stand der Technik üblichen Bindemitteln eingesetzt werden. Beim Einsatz in Polyolefinen kann es z. B. vorteilhaft sein, entsprechende niedermolekulare Polyolefine als Trägermaterialien zusammen mit mindestens einem erfindungsgemäßen Kammcopolymer oder einer Kammcopolymermischung einzusetzen.

Eine erfindungsgemäße Verwendung besteht u. a. auch in der Herstellung dispergierbarer, pulverpartikel- und/oder faserpartikel-förmiger Feststoffe, insbesondere in der Herstellung von dispergierbaren Pigmenten oder Kunststoffüllstoffen, wobei die Partikel mit einem erfindungsgemäßen Kammcopolymer beschichtet sein können. Derartige Beschichtungen von organischen oder anorganischen Feststoffen werden in bekannter Weise, wie sie z. B. in EP-A-0 270 126 beschrieben, ausgeführt. Hierbei kann das Lösungs- oder Emulsionsmittel entweder entfernt werden oder im Gemisch unter Bildung einer Paste verbleiben. Solche Pasten sind gängige Handelsprodukte, die ggf. Bindemittel sowie weitere Hilfs- und Zusatzstoffe enthalten können.

Speziell bei Pigmenten kann die Modifizierung, d. h. Beschichtung der Pigmentoberfläche durch Zusatz der erfindungsgemäßen Kammcopolymeren oder der vorstehend beschriebenen Kammcopolymermischungen während oder nach der Synthese der Pigmente erfolgen, d. h. durch deren Zugabe zur Pigmentsuspension oder während bzw. nach dem Pigmentfinish.

Die auf diese Weise vorbehandelten Pigmente zeichnen sich durch eine leichtere Einarbeitbarkeit sowie durch eine höhere Farbstärke gegenüber nicht Oberflächen behandelten Pigmenten aus.

Die erfindungsgemäßen Kammcopolymere oder die vorstehend beschriebenen Kammcopolymermischungen eignen sich als Netz- und Dispergierungsmittel für eine Vielzahl von Pigmenten wie Mono-,
Di-, Tri- und Polyazopigmente, Oxazin-, Dioxazin-, Thiazin-Pigmente, Diketo-pyrrolopyrrole, Phthalocyanine, Ultramarin und andere Metallkomplex-Pigmente, indigoide Pigmente, Diphenylmethan-, Triarylmethan-, Xanthen-, Acridin-, Chinacridon-, Methin-Pigmente, Anthrachinon-, Pyranthron-, Perylen- und andere polycyclische Carbonyl-Pigmente. Weitere Beispiele für erfindungsgemäß dispergierbare organische Pigmente finden sich in der Monographie: W. Herbst, K. Hunger "Industrial Organic Pigments", 1997 (Verlag: Wiley-VCH, ISBN: 3-527-28836-8). Beispiele für erfindungsgemäß dispergierbare, anorganische Pigmente sind Pigmente auf Basis von Ruß, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan, Zink, Mangan, Cobalt, Eisen, Chrom, Antimon, Magnesium, Aluminium (beispielsweise Nickeltitangelb, Bismut-vanadatmolybdatgelb oder Chromtitangelb). Weitere Beispiele sind in der Monographie: G. Buxbaum Industrial Inorganic Pigments", 1998 (Verlag: Wiley-VCH, ISBN: 3-527-28878-3) genannt. Anorganische Pigmente können auch magnetische Pigmente auf Basis von Reineisen, Eisenoxiden und Chromoxiden oder Mischoxiden, Metalleffektpigmente aus Aluminium, Zink, Kupfer oder Messing sowie Perlglanzpigmente, fluoreszierende und phosphoreszierende Leuchtpigmente sein. Mit Hilfe der erfindungsgemäßen Kammcopolymeren oder der vorstehend aufgeführten Kammcopolymermischungen können auch nanoskalige, organische oder anorganische Feststoffe mit Teilchengrößen unterhalb von 100 nm, wie bestimmte Rußtypen oder Partikel, die aus einem Metall-, oder Halbmetalloxid bzw. - hydroxid bestehen, sowie Partikel dispergiert werden, die aus gemischten Metall- und/oder Halbmetalloxiden bzw. -hydroxiden bestehen. Hierfür geeignete Oxide sind Oxide und/oder Oxidhydroxide des Aluminiums, Siliziums, Zinks, Titans, die zur Herstellung solch extrem feinteiligen Feststoffe eingesetzt werden können. Der Herstellprozess dieser oxidischen bzw. hydroxidischen bzw. oxidhydroxidischen Teilchen kann über verschiedene Verfahren z. B. lonenaustauschprozesse, Plasmaprozesse, Sol-Gel-Verfahren, Ausfällung, Zerkleinerung (z. B. durch Vermahlung) oder Flammhydrolyse usw. erfolgen. Bei diesen nanoskaligen Feststoffen kann es sich auch um sogenannte Hybrid-Partikeln handeln, die aus einem anorganischen Kern und einer organischen Hülle oder umgekehrt aufgebaut sind.

Erfindungsgemäß dispergierbare pulver- oder faser-förmige Füllstoffe sind u. a. solche, die aus pulver oder faser-förmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff aufgebaut sind. Weitere Beispiele für dispergierbare Pigmente oder Füllstoffe finden sich auch in der EP-A-0 270 126. Auch Flammschutzmittel wie z. B. Aluminium- oder Magnesiumhydroxid und Mattierungsmittel wie z. B. Kieselsäuren lassen sich ebenfalls mit den erfindungsgemäßen Kammcopolymeren oder den vorstehend aufgeführten Kammcopolymermischungen hervorragend dispergieren und stabilisieren.

Ein weiterer Gegenstand der vorliegenden Erfindung sind daher auch Lacke, Pasten und Formmassen enthaltend wenigstens ein erfindungsgemäßes Kammcopolymeres oder wenigstens ein erfindungsgemäßes Kammcopolymergemisch und wenigstens ein Pigment, ein organisches Trägermedium und/oder Wasser, sowie gegebenenfalls Bindemittel und übliche Hilfsstoffe.

Ein weiterer Gegenstand der vorliegenden Erfindung sind auch die vorstehend genannten Pigmente beschichtet mit wenigstens einem erfindungsgemäßen Kammcopolymeren oder mit wenigstens einem vorstehend aufgeführten, erfindungsgemäßen Kammcopolymergemisch.

Die erfindungsgemäßen Kammcopolymeren oder die vorstehend aufgeführten, erfundungsgemäßen Kammcopolymergemische können auch gegebenenfalls auch in Mischung mit weiteren bekannten Netz-und Dispergiermitteln eingesetzt werden, um speziellen Anforderungen gerecht zu werden. Dazu können sie mit Netz- und Dispergiermitteln zusammen verwendet werden, die beispielsweise in US 6,849,679, US 4,656,226, US 4,755,563, US 5,085,698, US 5,160,372, US 5,219,945, US 5,221,334, US 5,272,201, US 5,519,085, US 5,859,113, US 6,306,994, US 6,316,564, US 6,413,306, WO 01/44389, WO 03/046029, EP 0 438 836, 1 416 019, DE 35 27 038 und DE 36 41 581 offenbart sind, indem sie mit diesen Netz- und Dispergiermittel vor oder während der Anreibung der Pigmente oder Feststoffe gemischt werden.

### BEISPIELE

### Herstellung von SMA Copolymeren mit Seitenketten

### Polymer 1

65 g Kunstharz SMA 2000 (mit 187 mmol Anhydridgruppen) werden in 65 g Methoxypropylacetat angelöst und langsam mit einer Mischung aus 94 mmol Jeffamin M 2070 und 94 mmol N,N-Dimethylaminopropylamin versetzt. Bei 170°C wird die Mischung 4 h zur Reaktion gebracht. Hierbei wird das Methoxypropylacetat abdestilliert.

### Polymer 2

60 g Kunstharz SMA 1000 (mit 254 mmol Anhydridgruppen) werden in 90 g Methoxypropylacetat angelöst und langsam mit einer Mischung aus 127 mmol Jeffamin M 2070 und 127 mmol N,N-Dimethylaminopropylamin versetzt. Bei 170°C wird die Mischung 4 h zur Reaktion gebracht. Hierbei wird das Methoxypropylacetat abdestilliert.

### Polymer 3

65 g Kunstharz SMA 2000 (mit 187 mmol Anhydridgruppen) werden in 65 g Methoxypropylacetat angelöst und langsam mit 94 mmol Jeffamin M 2070 vermischt. Bei 170°C wird die Mischung 4 h zur Reaktion gebracht. Hierbei wird das Methoxypropylacetat abdestilliert. Anschließend werden 94 mmol N,N-Dimethylaminopropylamin hinzugegeben und weitere 4 h bei 50°C gerührt.

### Polymer 4

65 g Kunstharz SMA 2000 (mit 187 mmol Anhydridgruppen) werden in 65 g Methoxypropylacetat angelöst und langsam mit 94 mmoi Jeffamin M 2070 vermischt. Bei 170°C wird die Mischung 4 h zur Reaktion gebracht. Hierbei wird das Methoxypropylacetat abdestilliert.

### Polymer 5

65 g Kunstharz SMA 2000 (mit 187 mmol Anhydridgruppen) werden in 65 g Methoxypropylacetat angelöst und langsam mit 94 mmol Jeffamin M 2070 und 94 mmol 2-Aminoethanol vermischt. Bei 170°C wird die Mischung 4 h zur Reaktion gebracht. Hierbei wird das Methoxypropylacetat abdestilliert.

**Netz- und Dispergiermittel 1** (Vergleichsbeispiel mit aminischer Haftgruppe) Das Polymer 1 wird 40 Gew%ig in 30% Methoxypropylacetat und 30 Gew% Butylglycol angelöst.

**Netz- und Dispergiermittel 2** (Vergleichsbeispiel in Anlehnung an US 6 528 593) 80 g des Polymers 1 werden in 60 g Methoxypropylacetat und 60 g Butylglycol angelöst und mit 3 g 50 Gew%iger wässriger Wasserstoffperoxidlösung 8 h bei Raumtemperatur zur Reaktion gebracht und anschließend für 2 h auf 100°C erhitzt, um das überschüssige Peroxid zu zerstören.

**Netz- und Dispergiermittel 3** (Vergleichsbeispiel in Anlehnung an US 7 078 464) 80 g des Polymers 1 werden in 62 g Methoxypropylacetat und 62 g Butylglycol angelöst und mit 2,6 g Methacrylsäure zum entsprechenden Salz umgesetzt.

### Netz- und Dispergiermittel 4

80 g des Polymers 1 werden in 62,85 g Methoxypropylacetat und 62,85 g Butylglycol angelöst und mit 3,8 g Benzylchlorid 8 h zur Reaktion gebracht.

### Netz- und Dispergiermittel 5

80 g des Polymers 2 werden in 63 g Methoxypropylacetat und 63 g Butylglycol angelöst und mit 4,1 g Benzylchlorid 8 h zur Reaktion gebracht.

### Netz- und Dispergiermittel 6

80 g des Polymers 3 werden in 62,85 g Methoxypropylacetat und 62.85 g Butylglycol angelöst und mit 3,8 g Benzylchlorid 8 h zur Reaktion gebracht.

### Netz- und Dispergiermittel 7 (Vergleichsbeispiel)

Beispiel 12 aus der deutschen Offenlegungsschrift DE 35 27 038

### Netz- und Disperglermittel 8 (Vergleichsbeispiel)

80 g des Polymers 4 werden in 80 g Butylglycol angelöst.

### Netz-und Dispergiermittel 9 (Vergleichsbeispiel)

80 g des Polymers 5 werden in 80 g Butylacetat angelöst.

### Netz- und Dispergiermittel 10

80 g des Polymers 5 werden in 100 g Butylacetat angelöst und mit 2,7 g Polyphosphorsäure über 3 h bei 80°C umgesetzt. Anschließend wird destillativ das Butylacetat entfernt und das resultierende Polymer 50 Gew%ig in Butylglycol angelöst.
- Kunstharz SMA 2000: Styrol-Maleinsäureanhydrid-Copolymer, Hersteller Cray Valley
- Jeffamin M 2070: aminterminierter EO/PO-Polyether, Hersteller Huntsman

### Anwendungstechnische Abtestung

### Löslichkeitstests

Alle Netz- und Dispergiermittel 1 bis 10 sind jeweils 5 Gew%ig homogen in Wasser, Methoxypropylacetat, Butylacetat, Butylglycol oder Metoxypropanol löslich.

### Lösungsmittelhaltige Lacke

| | Gew% |
|---|---|
| Mahlgut: | |
| Harz | 14,3 % |
| n-Butanol | 5 % |
| Netz und Dispergiermittel | 5 % (bezogen auf Festkörper) |
| Pigment | 15 % |
| wurde mit | |
| PMA (Methoxypropylacetat) | auf 100 % aufgefüllt |

- Harz:: Benzylmethacrylat/Methacrylsäure-Copolymer, 35%ig in Methoxypropylacetat, Säurezahl 53, Hersteller Byk- Chemie
- Pigment:: Irgaphor Red BT-CF DPP Pigment PR 254, Hersteller Ciba Speciality Chemicals
- PMA:: Methoxypropylacetat

Dispergierung: Rüttler Paintshaker DAS 200, (1,4 bis 1,7 mm Zirconox-Perlen) 3 h bei 30°C.

### Anlösetest:

Der Lack wird auf eine Glasplatte mittels eines Spin-Coaters aufgetragen, so dass eine Schichtdicke von 1200 nm ± 200 nm erzielt wird. Anschließend werden die getrockneten Glasplatten in eine Entwicklerflüssigkeit respektive in Methoxypropylacetat gehalten.

### Entwickler:

Die Flüssigkeit wird durch einen Magnetrührer bewegt. Es wird die Zeit gemessen, bis zu der sich der Lackfilm komplett von der Glasplatte gelöst hat.

### Methoxypropylacetat:

Die Glasplatte wird 10 min in Methoxypropylacetat getaucht und anschließend wird die Flüssigkeit durch einen Magnetrührer bewegt. Es wird die Zeit gemessen, bis zu der sich der Lackfilm komplett von der Glasplatte gelöst hat.

### Beurteilung des Lacks mit dem

| **Netz- und Dispergiermittel** | **Viskosität bei 100 1/s**** | **Löslichkeit im Entwickler** | **Ablöseverhalten** | **Löslichkeit in PMA** | **Ablöseverhalten** |
|---|---|---|---|---|---|
| 1 | 40 mPa*s | 20 sec | gelöst | 130 sec | Schuppen |
| 2 | 25 mPa*s | 12 sec | gelöst | 117 sec | gelöst |
| 3 | 37 mPa*s | 7 sec | gelöst | nicht löslich | - |
| 7 | 19 mPa*s | 70 sec | Schuppen | 120 sec | Schuppen |
| | | | | | |
| 4 | 12 mPa*s | 15 sec | gelöst | 179 sec | gelöst |
| 5 | 18 mPa*s | 43 sec | gelöst | 140 sec | gelöst |
| 6 | 19 mPa*s | 3 sec | gelöst | 190 sec | gelöst |

| | | | | | |
|---|---|---|---|---|---|
| ** Die Viskositätsbestimmung erfolgte mit Hilfe des Gerätes Stresstech von der Firma Reologica Instruments AB, Lund, Schweden Meßparameter: CSR-Messung (vorgegebene Scherrate), Kegel-Platte-Geometrie (Kegel: 4 cm, 1°), Messbereich: 0,1 -1000 s⁻¹, Messbedingungen: Auf- und Abmessung, keine Vorscherung, Ausgleichzeit: 10s | | | | | |

Netz- und Dispergiermittel des Vergleichsbeispiels 7 werden derzeit als Netz- und Dispergiermittel in Color Resists eingesetzt. Sie führen zu einer relativ langen Ablösezeit des Color Resisits im Entwickler und zum nicht vollständigen Auflösen des Lackes im Entwickler.

Bei der Verwendung eine Netz- und Dispergiermittels gemäß den Vergleichsbeispielen 1 - 3 werden nicht die geforderten sehr niedrigen Viskositäten für den Color Resist erreicht. Durch den Einsatz von Netz- und Dispergiermittel mit Haftgruppen gemäß den erfindungsgemäßen Beispielen 4 - 6 kann die Viskosität auf das notwendige Ausmaß weiter reduziert werden.

### Wässrige Pigmentkonzentrate

| | Gew% |
|---|---|
| Wasser | 26,5 % |
| Netz- und Dispergier-Mittel | 12 % |
| Pigment (Bayferrox 130 M) | 60 % |
| BYK-024 Entschäumen | 1 % |
| BYK-420 Rheologieadditiv | 0,5 % |
| | 100 % |

| | |
|---|---|
| Pigment: | Bayferrox 130M (Eisenoxidpigment, Hersteller Lanxess) |
| BYK-024: | Entschäumer, Hersteller: Byk Chemie |
| | |
| BYK-420: | Rheologieadditiv, Hersteller Byk Chemie |
| Dispergierung: | Dispermat CV, 8000 U/min, 40 min Dispergierzeit bei 40°C |

Visuelle Beurteilung der Viskosität der Pigmentkonzentrate:

| | | | |
|---|---|---|---|
| | | | |
| Netz- und Dispergierungsmittel | 8 | 9 | 10 |
| Viskosität | 4 | 5 | 2 |

Die Beurteilung der Viskosität erfolgte gemäß Schulnoten, d. h.
1 = sehr gut (sehr dünnflüssig)
bis
5 = mangelhaft (hochviskos)

Die Pigmentkonzentrate mit dem Pigment Bayferrox 130M und dem Netz- und Dispergiermittel 8 bzw. 9, welche keine ionischen Haftgruppen enthalten, zeigen eine hohe Viskosität. Der Einsatz des erfindungsgemäßen Netz- und Dispergiermittel 10 leifert dagegen eine deutlich niedrigere Viskosität des Pigmentkonzentrates.

## Patentansprüche

1. Ein Kammcopolymer basierend auf einem ggf. substituierten Styrol/Maleinsäureanhydridcopolymerisat enthaltend die nachstehend aufgeführten Kombinationen der folgenden Struktureinheiten I bis X: 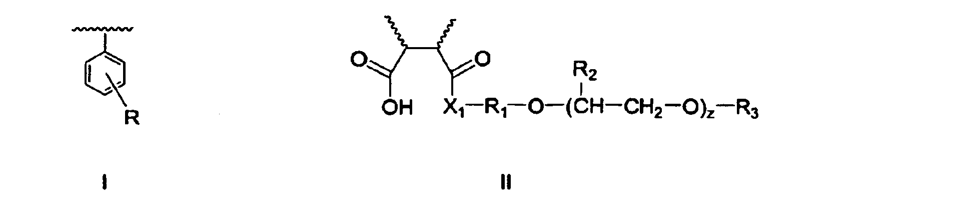 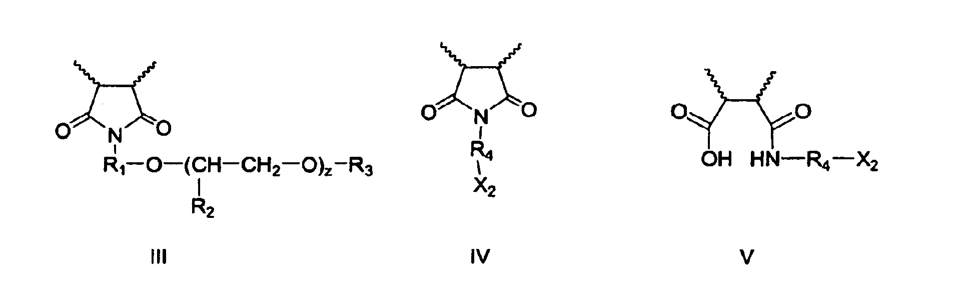 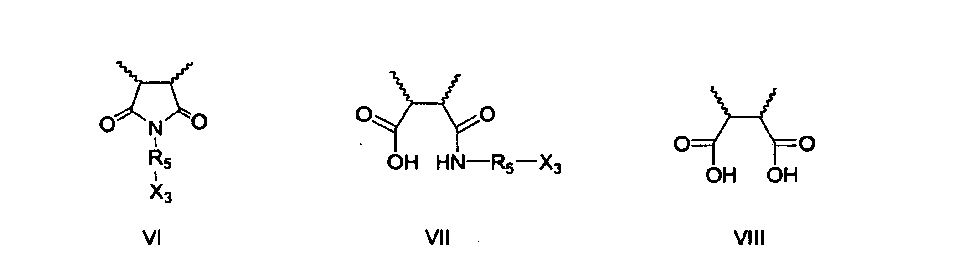 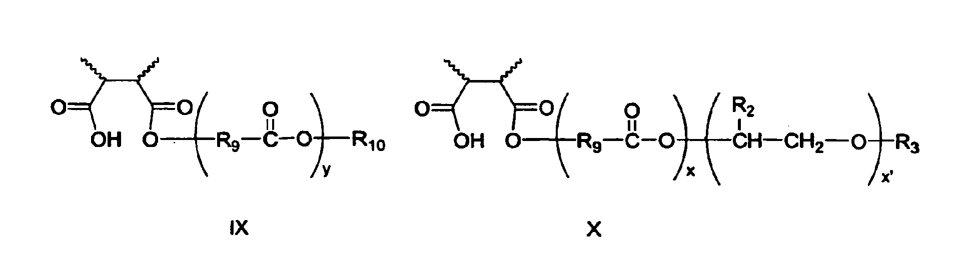 worin
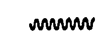 für die Kettenverknüfung,
R für H, Halogen, vorzugsweise Chlor, eine Nitrogruppe, eine Alkylgruppe mit 1 bis 15 C-Atomen oder eine Arylgruppe mit 6 bis 18 C-Atomen,
R₁ für eine Alkylengruppe mit 1 bis 24 C-Atomen oder eine substituierte oder unsubstituierte Arylengruppe mit 6 bis 18 C-Atomen,
R₂ für H oder eine Alkylgruppe, wobei 0 bis 95 %, vorzugsweise 30 bis 70 % von R₂ die Bedeutung einer Alkylgruppe haben,
z für eine ganze Zahl von 3 bis 70,
X₁ für NH und/oder O,
R₃ für eine ggf. substituierte, ggf. einfach oder mehrfach ungesättigte Alkylgruppe mit 1 bis 30 C-Atomen, eine ggf. substituierte Arylgruppe mit von 6 bis 18 C-Atomen, eine ggf. substituierte Cycloalkylgruppe mit 4 bis 10 C-Atomen,
R₄ und R₅, gleich oder verschieden, für eine ggf. substituierte Alkylengruppe mit 1 bis 15 Atomen, eine ggf. substituierte Cycloalkylengruppe mit 4 bis 10 C-Atomen oder eine substituierte oder unsubstituierte Arylengruppe mit 6 bis 18 C-Atomen,
X₂ für eine Phosphorsäureestergruppe oder eine Hydroxylgruppe steht, wobei mindestens 25% von X₂ für eine Phosphorsäureestergruppe stehen,
X₃ für eine N,N-disubstituierte Aminogruppe der allgemeinen Formel A, 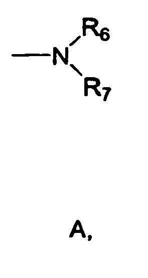 oder eine quartäre Ammoniumgruppe der allgemeinen Formel B, 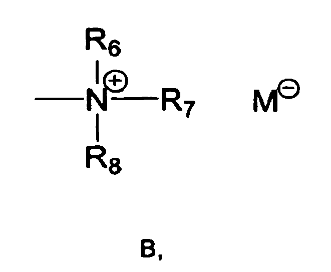 stehen, wobei
M^{Θ} für einen Carbonsäurerest, der nicht ethylenisch ungesättigt ist, einen Sulfatrest oder ein Halogenid, vorzugsweise ein Chlorid, Bromid oder Jodid steht,
R₆, R₇, R₈, gleich oder verschieden, für eine Alkylgruppe mit 1 bis 15 C- Atomen, eine Cycloalkylgruppe mit 6 bis 10 C-Atomen oder eine substituierte oder unsubstituierte Arylgruppe mit 6 bis 18 C-Atomen, vorzugsweise für eine Methyl-, Ethyl- und/oder Benzyl-Gruppe,
wobei
mindestens 25% von X₃ für eine quartäre Ammoniumgruppe der allgemeinen Formel B, stehen,
und
R₉ für einen ggf. substituierten Alkylenrest mit 2 bis 15 C-Atomen, einen ggf. substituierten Cycloalkylenrest mit 6 bis 10 C-Atomen und/oder für einen ggf. substituierte Arylenrest mit 6 bis 18 C-Atomen,
R₁₀ für einen ggf. substituierten Alkylrest mit 1 bis 30 C-Atomen, der ggf. einfach oder mehrfach ungesättigten sein kann, und/oder einen ggf. substituierten Arylrest
x für eine ganze Zahl von 1 bis 70
x' für eine ganze Zahl von 3 bis 70
y für eine ganze Zahl von 1 bis 70
stehen,
wobei das Kammcopolymer entweder eine
1. Kombination aus den Struktureinheiten I bis V und VIII, wobei X₁ in der Struktureinheit 11 nur für eine NH-Gruppe steht,
eine 2. Kombination aus den Struktureinheiten I bis III und VI bis VIII,
oder
eine 3. Kombination aus den Struktureinheiten I bis III und VI bis VIII und der Struktureinheit IX und/oder X,
aufweist,
und ggf. im Gemisch mit wenigstens einem weiteren Kammcopolymeren basierend auf einer AB-Blockcopolymerstruktur aus einem A-Block, der aus ggf. substituiertem Styrol und Maleinsäureanhydrid aufgebaut ist, und wenigstens einem B-Block, der aus ggf. substituierten Styrol und/oder (Meth)acrylat-Monomeren aufgebaut ist, vorliegt und dessen Maleinsäureanhydridgruppen bis zumindest 70 % als Struktureinheiten in einer der folgenden Kombinationen vorliegen:
eine 4. Kombination aus den Struktureinheiten II bis V und VIII, wobei X₁ in der Struktureinheit II nur für eine NH-Gruppe steht,
eine 5. Kombination aus den Struktureinheiten II bis III und VI bis VIII
oder eine
6. Kombination aus den Struktureinheiten II bis III und VI bis VIII und der Struktureinheit IX und/oder X.

2. Ein Kammcopolymer oder dessen Gemisch mit wenigstens einem weiteren Kammcopolymeren nach Anspruch 1, **dadurch gekennzeichnet, dass**
R H ist,
R₁ eine Alkylengruppe mit 1 bis 6 C-Atomen ist,
R₂ H oder CH₃ ist,
wobei das Molverhältnis von Ethylenoxid-Einheiten zu Propylenoxid-Einheiten in der Struktureinheit II und der Struktureinheit III im Bereich von 30:70 bis 70:30 liegt,
X₂ zumindest zu 50 % eine Phosphorsäureestergruppe ist,
R₃ eine Alkylgruppe mit 1 bis 8 C-Atomen oder eine ggf. substituierte Arylgruppe mit 6 C-Atomen ist,
R₄ eine Alkylengruppe mit 1 bis 8 C-Atomen ist,
R₅ eine Alkylengruppe mit 1 bis 8 C-Atomen ist,
X₃ bis zu 100 % als ein Rest der allgemeinen Formel B, vorliegt
R₆, R₇, R₈, gleich oder verschieden, eine gegebenenfalls substituierte Alkylgruppe mit 1 bis 8 C-Atomen, bevorzugt ein Methyl-, Ethyl- oder Benzyl- Rest ist,
R₉ eine gegebenenfalls substituierte Alkylengruppe mit 3 bis 8 C-Atomen ist,
R₁₀ ein Alkylrest mit 4 bis 20 C-Atomen ist,
z eine ganze Zahl von 5 bis 60 ist,
y eine ganze Zahl von 2 bis 60 ist,
x eine ganze Zahl von 2 bis 60 ist,
x' eine ganze Zahl von 5 bis 60 ist,
wobei das Mot-Verhältnis der Struktureinheiten II, III und IX und/oder X zu den Struktureinheiten VI und VII von 25:75 bis 75:25 beträgt.

3. Ein Kammcopolymer oder dessen Gemisch mit wenigstens einem weiteren Kammcopolymer nach Anspruch 1 oder 2, **dadurch gekennzeichnet, dass** das Mol-Verhältnis der Struktureinheit I zu der Gesamteinheit der übrigen in der 1. bis 3. Kombination vorliegenden Struktureinheiten des Kammcopolymeren bzw. zu der Gesamtheit der übrigen in der 4. bis 6. Kombination vorliegenden Struktureinheiten des weiteren Kammcopolymeren 1:1 bis 8:1, vorzugsweise von 1:1 bis 2:1, beträgt.

4. Ein Kammcopolymer oder dessen Gemisch mit wenigstens einem weiteren Kammcopolymer nach einem der vorstehenden Ansprüche, **dadurch gekennzeichnet, dass** in den Struktureinheiten I bis X
R = H,
R₁ ein Ethylen-, Propylen- und/oder Isopropylen-Rest,
R₂ H oder ein CH₃-Rest,
wobei das Molverhältnis von Ethylenoxid-Einheiten zu Propylenoxid-Einheiten 70:30 bis 30:70 beträgt,
R₃ ein CH₃- oder C₄H₉-Rest,
z eine ganze Zahl von 25 bis 50,
X₁ NH und/oder O
R₄, R₅, gleich oder verschieden, ein Alkyl-Rest mit 2 - 4 C-Atomen,
R₉, R₇, R₈, gleich oder verschieden, ein CH₃-, C₂H₅- oder Benzyl-Rest mit M^{Θ} Chlorid oder Bromid,
R₉ ein Alkylen-Rest mit 4 und/oder 5 C-Atomen,
R₁₀ ein Alkyl-Rest mit 4 -14 C-Atomen,
x eine ganze Zahl von 4 bis 30,
x' eine ganze Zahl von 25 bis 50 und
y eine ganze Zahl von 4 bis 30
sind.

5. Ein Kammcopolymer oder dessen Gemisch mit wenigstens einem weiteren Kammcopolymeren erhältlich
a) durch Umsetzung von wenigstens einem ggf. substituierten Styrol/Maleinsäureanhydrid Copolymerisat (SMA Harz) gegebenenfalls im Gemisch mit wenigstens einem weiteren Copolymeren basierend auf einer AB-Blockcopolymerstruktur aus wenigstens einem A-Block, der aus ggf. substituierten Styrol und Maleinsäureanhydrid aufgebaut ist, und einem B-Block, der aus ggf. substituierten Styrol und/oder (Meth)acrylat-Monomeren aufgebaut ist,
mit
a1) einer Mischung aus wenigstens einem eine primäre Aminoendgruppe aufweisenden Polyalkylenoxidmonoamin und wenigstens einem Aminoalkohol
oder
a2) einer Mischung aus wenigstens einem eine primäre Aminoendgruppe aufweisenden Polyalkylenoxidmonoamin und wenigstens einem N,N-disubstituierten Diamin
oder
a3) einer Mischung a2) und wenigstens einem Polymer ausgewählt aus der Gruppe bestehend aus monohydroxyterminierten Polyalkylenoxiden, monohydroxyterminierten Polyester und monohydroxyterminierten Polyester-Polyalkylenoxid-Blockcopolymeren,
und
b) einer anschließenden, zumindest teilweisen Umsetzung
b1) der freien Hydroxylgruppen des nach a1) erhaltenen Kammcopolymeren oder der Kammcopolymermischung zu Phosphorsäureestergruppen
oder
b2) der freien N,N-disubstituierten Aminogruppen des nach a2) oder a3) erhaltenen Kammcopolymeren oder Kammcopolymermischungen mit mindestens einer Alkylierungsverbindung zu quartären Ammoniumgruppen.

6. Ein Kammcopolymer oder dessen Gemisch mit wenigstens einem weiteren Kammcopolymer erhältlich nach Anspruch 5, **dadurch gekennzeichnet, dass** jeweils vor der Umsetzung gemäß a) das SMA Harz oder dessen Gemisch mit wenigstens einem weiteren Copolymeren, basierend auf einer AB-Blockcopolymerstruktur in einem organischen Lösungsmittel angelöst vorliegt.

7. Ein Kammcopolymerisat oder dessen Gemisch mit wenigstens einem weiteren Kammcopolymer erhältlich nach Anspruch 5 oder 6, **dadurch gekennzeichnet, dass** die Umsetzung gemäß a) bei einer Temperatur von 20°C bis 200°C, vorzugsweise 30°C bis 170 °C, durchgeführt wird.

8. Ein Kammcopolymer oder dessen Gemisch mit wenigstens einem weiteren Kammcopolymer erhältlich nach einem der Ansprüche 5 bis 7, **dadurch gekennzeichnet, dass** jeweils bei der Umsetzung gemäß a1), a2) bzw. a3) das Molverhältnis der Polyalkylenoxidmonoamin-Komponente zur Aminoalkohol- bzw. zur N,N-disubstituierten Diamin-Komponente bzw. der Polyalkylenoxidmonoamin-Komponente und der monohydroxyterminierte Polyalkylenoxid-, Polyester und/oder Polyester-Polyalkylenoxid-Blockcopolymer-Komponente zur N,N-disubstituierten Diamin-Komponente im Bereich von 25 :75 bis 75:25, vorzugsweise von 40:60 bis 60:40, liegt.

9. Ein Kammcopolymer oder dessen Gemisch mit wenigstens einem weiteren Kammcopolymer erhältlich nach einem der Ansprüche 5 bis 8, **dadurch gekennzeichnet, dass** der Umsetzungsgrad bei der Umsetzung gemäß b1) bzw. b2) wenigstens 25 %, vorzugsweise wenigstens 50 % beträgt.

10. Verwendung von wenigstens einem Kammcopolymeren oder dessen Gemisch mit wenigstens einem weiteren Kammcopolymeren nach einem der Ansprüche 1 bis 4 oder erhältlich nach einem der Ansprüche 5 bis 9 als Netz- und Dispergiermittel gegebenenfalls im Gemisch mit wenigstens einem weiteren üblichen Netz- und Dispergiermittel und ggf. unter Mitverwendung von üblichen Hilfsstoffen, vorzugsweise üblichen Bindemitteln.

11. Verwendung nach Anspruch 10 für Feststoffe, vorzugsweise Pigmente und/oder Füllstoffe.

12. Verwendung nach Anspruch 10 oder 11 bei der Herstellung und/oder Verarbeitung von Feststoffkonzentraten, vorzugsweise Pigmentkonzentraten oder Pasten, oder bei der Herstellung und/oder Verarbeitung von Lacken, Druckfarben, Tinten für inkjet-Verfahren, Papierstrich, Leder- und/oder Textilfarben, Keramiken, kosmetische Zubereitungen, oder bei der Herstellung und/oder Verarbeitung von Gieß- und/oder Formmassen auf Basis von synthetischen, halbsynthetischen oder natürlichen Polymeren, oder bei der Herstellung und/oder Verarbeitung von Farbfilterlacken (= Color Resists), oder bei der Herstellung von Farbfiltern für Flüssigkristall-Anzeigen, Flüssigkristall-Bildschirme, Farbauflösungsgeräte, Sensoren, Plasmabildschirme, Anzeigen auf Basis der SED oder für MLCC.

13. Lacke, Pasten oder Formmassen enthaltend wenigstens ein Kammcopolymer oder dessen Gemisch mit wenigstens einem weiteren Kammcopolymeren nach einem der Ansprüche 1 bis 4 oder erhältlich nach einem der Ansprüche 5 bis 9 als Netz- und Dispergiermittel, wenigstens einen Feststoff, vorzugsweise ein Pigment, gegebenenfalls ein organisches oder wässriges Medium, gegebenenfalls wenigstens ein Bindemittel und/oder gegebenenfalls weitere übliche Hilfsstoffe, vorzugsweise wenigstens ein weiteres übliches Netz- und Dispergiermittel.

14. Ein Pigment, dessen Oberfläche mit wenigstens einem Kammcopolymeren oder dessen Gemisch mit wenigstens einem weiteren Kammcopolymeren gemäß einem der Ansprüche 1 bis 4 oder erhältlich gemäß einem der Ansprüche 5 bis 9 modifiziert ist.

## Claims

1. A comb copolymer based on a possibly substituted styrene/maleic anhydride copolymerisate containing the combinations of the following structural units I to X indicated below: 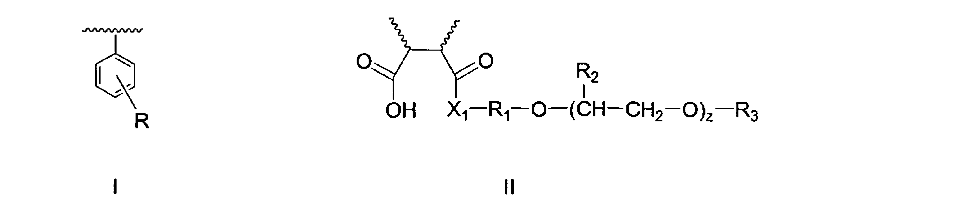 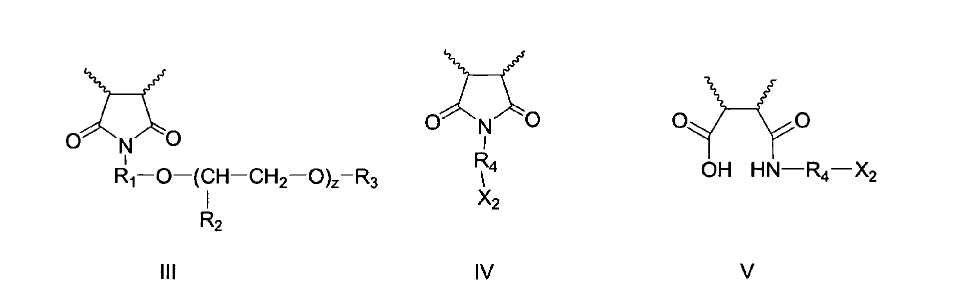 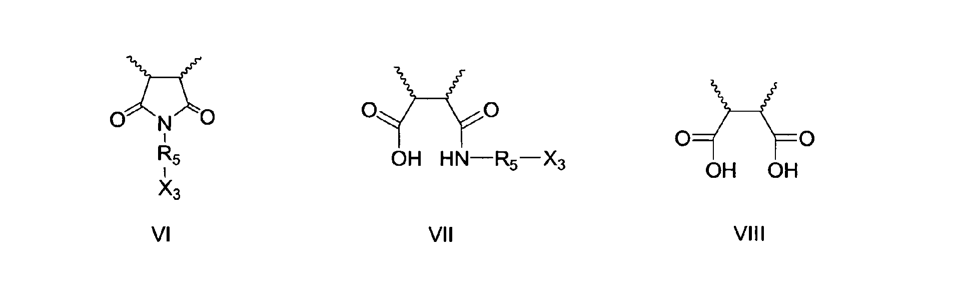 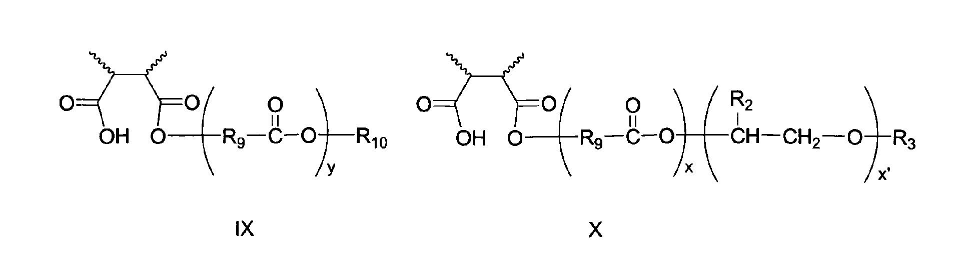 wherein
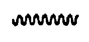 stands for the chain linkage,
R stands for H, halogen, preferably chlorine, a nitro group, an alkyl group with 1 to 15 C atoms or an aryl group with 6 to 18 C atoms,
R₁ stands for an alkylene group with 1 to 24 C atoms or a substituted or unsubstituted arylene group with 6 to 18 C atoms,
R₂ stands for H or an alkyl group, wherein 0 to 95%, preferably 30 to 70% of R₂ represents an alkyl group,
z stands for a whole number from 3 to 70,
X₁ stands for NH and/or O,
R₃ stands for a possibly substituted, possibly mono- or polyunsaturated alkyl group with 1 to 30 C atoms, a possibly substituted aryl group with 6 to 18 C atoms, a possibly substituted cycloalkyl group with 4 to 10 C atoms,
R₄ and R₅, the same or different, stand for a possibly substituted alkylene group with 1 to 15 C atoms, a possibly substituted cycloalkylene group with 4 to 10 C atoms or a substituted or unsubstituted arylene group with 6 to 18 C atoms,
X₂ stands for a phosphoric acid ester group or a hydroxyl group, wherein at least 25% of X₂ stands for a phosphoric acid ester group,
X₃ stands for an N,N-disubstituted amino group of the general formula A, 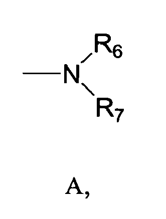 or a quaternary ammonium group of the general formula B, 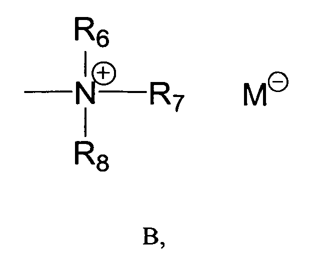 wherein
M^{Θ} stands for a carboxylic acid residue that is not ethylene unsaturated, a sulphate residue or a halide, preferably a chloride, bromide or iodide,
R₆, R₇, R₈, the same or different, stand for an alkyl group with 1 to 15 C atoms, a cycloalkyl group with 6 to 10 C atoms or a substituted or unsubstituted aryl group with 6 to 18 C atoms, preferably for a methyl, ethyl and/or benzyl group, wherein at least 25% of X₃ stands for a quaternary ammonium group of the general formula B, and
R₉ stands for a possibly substituted alkylene residue with 2 to 15 C atoms, a possibly substituted cycloalkylene residue with 6 to 10 C atoms and/or for a possibly substituted arylene residue with 6 to 18 C atoms,
R₁₀ stands for a possibly substituted alkyl residue with 1 to 30 C atoms, which can possibly be mono- or polyunsaturated, and/or a possibly substituted aryl residue,
x stands for a whole number from 1 to 70
x' stands for a whole number from 3 to 70
y stands for a whole number from 1 to 70,
wherein the comb copolymer has either a
first combination of structural units I to V and VIII, wherein X₁ in structural unit II only stands for an NH group,
a second combination of structural units I to III and VI to VIII,
or a
third combination of structural units I to III and VI to VIII and structural unit IX and/or X,
and is possibly present in mixture with at least one further comb copolymer based on an AB block copolymer structure comprising an A block, which is formed from possibly substituted styrene and maleic anhydride, and at least one B block, which is formed from possibly substituted styrene and/or (meth)acrylate monomers, and its maleic anhydride groups are present to at least 70% as structural units in one of the following combinations:
a fourth combination of structural units II to V and VIII, wherein X₁ in structural unit II only stands for an NH group,
a fifth combination of structural units II to III and VI to VIII
or a
sixth combination of structural units II to III and VI to VIII and structural unit IX and/or X.

2. Comb copolymer or mixture thereof with at least one further comb copolymer according to claim 1, **characterised in that**
R is H
R₁ is an alkylene group with 1 to 6 C atoms,
R₂ is H or CH₃,
wherein the molar ratio of ethylene oxide units to propylene oxide units in structural unit II and structural unit III lies in the range of 30:70 to 70:30,
X₂ to at least 50% is a phosphoric acid ester group,
R₃ is an alkyl group with 1 to 8 C atoms or a possibly substituted aryl group with 6 C atoms,
R₄ is an alkylene group with 1 to 8 C atoms,
R₅ is an alkylene group with 1 to 8 C atoms,
X₃ is present to 100% as a residue of the general formula B,
R₆, R₇, R₈, the same or different, are a possibly substituted alkyl group with 1 to 8 C atoms, preferably a methyl, ethyl or benzyl residue,
R₉ is a possibly substituted alkylene group with 3 to 8 C atoms,
R₁₀ is an alkyl residue with 4 to 20 C atoms,
z is a whole number from 5 to 60,
y is a whole number from 2 to 60,
x is a whole number from 2 to 60,
x' is a whole number from 5 to 60,
wherein the molar ratio of structural units II, III and IX and/or X to structural units VI and VII amounts to 25:75 to 75:25.

3. A comb copolymer or mixture thereof with at least one further comb copolymer according to claim 1 or 2, **characterised in that** the molar ratio of structural unit I to the entire unit of the other structural units of the comb copolymer present in the first to the third combinations or to all the other structural units of the further comb copolymer present in the fourth to sixth combinations amounts to 1:1 to 8:1, preferably from 1:1 to 2:1.

4. A comb copolymer or mixture thereof with at least one further comb copolymer according to one of the preceding claims, **characterised in that** in structural units I to X
R=H,
R₁ is an ethylene, propylene and/or isopropylene residue,
R₂ is H or a CH₃ residue,
wherein the molar ratio of ethylene oxide units to propylene oxide units amounts to 70:30 to 30:70,
R₃ is a CH₃ or C₄H₉ residue,
z is a whole number from 25 to 50,
X₁ is NH and/or O,
R₄, R₅ the same or different, are an alkyl residue with 2 - 4 C atoms,
R₆, R₇, R₈, the same or different, are a CH₃, C₂H₅ or benzyl residue, with M^{Θ} chloride or bromide
R₉ is an alkylene residue with 4 and/or 5 C atoms,
R₁₀ is an alkyl residue with 4 - 14 C atoms,
x is a whole number from 4 to 30,
x' is a whole number from 25 to 50 and
y is a whole number from 4 to 30.

5. A comb copolymer or mixture thereof with at least one further comb copolymer obtainable
a) by conversion of at least one possibly substituted styrene/maleic anhydride group copolymerisate (SMA resin) possibly in mixture with at least one further copolymer based on an AB block copolymer structure consisting of at least one A block, which is formed from possibly substituted styrene and maleic anhydride, and a B block, which is formed from possibly substituted styrene and/or (meth)acrylate monomers,
with
a1) a mixture of at least one polyalkylene oxide monoamine having a primary amino end group and at least one amino alcohol
or
a2) a mixture of at least one polyalkylene oxide monoamine having a primary amino group and at least one N,N-disubstituted diamine
or
a3) a mixture comprising a2) and at least one polymer selected from the group comprising monohydroxy-terminated polyalkylene oxides, monohydroxy-terminated polyesters and monohydroxy-terminated polyester-polyalkylene oxide block copolymers,
and
b) a subsequent at least partial conversion
b1) of the free hydroxyl groups of the comb copolymer obtained according to a1) or the comb copolymer mixture to phosphoric acid ester groups
or
b2) of the free N,N-disubstituted amino groups of the comb copolymer obtained according to a2) or a3) or the comb copolymer mixtures with at least one alkylation compound to quaternary ammonium groups.

6. A comb copolymer or mixture thereof with at least one further comb copolymer obtainable according to claim 5, **characterised in that** respectively before the conversion according to a), the SMA resin or mixture thereof with at least one further copolymer based on an AB block copolymer structure is present dissolved in an organic solvent.

7. A comb copolymer or mixture thereof with at least one further comb copolymer obtainable according to claim 5 or 6, **characterised in that** the conversion according to a) is conducted at a temperature of 20°C to 200°C, preferably 30°C to 170°C.

8. A comb copolymer or mixture thereof with at least one further comb copolymer obtainable according to one of claims 5 to 7, **characterised in that** respectively during the conversion according to a1), a2) or a3), the molar ratio of the polyalkylene oxide monoamine component to the amino alcohol or N,N-disubstituted diamine component or polyalkylene oxide monoamine component and of the monohydroxy-terminated polyalkylene oxide, polyester and/or polyester polyalkylene oxide block copolymer component to the N,N-disubstituted diamine component lies in the range of 25:75 to 75:25, preferably from 40:60 to 60:40.

9. A comb copolymer or mixture thereof with at least one further comb copolymer obtainable according to one of claims 5 to 8, **characterised in that** the degree of conversion in the conversion according to b1) or b2) amounts to at least 25%, preferably at least 50%.

10. Use of at least one comb copolymer or mixture thereof with at least one further comb copolymer according to one of claims 1 to 4, or obtainable according to one of claims 5 to 9, as wetting and dispersing agent possibly in mixture with at least one further usual wetting and dispersing agent, and if necessary by also using usual auxiliary substances, preferably usual binders.

11. Use according to claim 10 for solids, preferably pigments and/or fillers.

12. Use according to claim 10 or 11 for producing and/or processing solid concentrates, preferably pigment concentrates or pastes, or for producing and/or processing paints, printing inks, inks for inkjet processes, coating, leather and/or textile dyes, ceramics, cosmetic preparations or for producing and/or processing casting and/or moulding compounds based on synthetic, semisynthetic or natural polymers, or for producing and/or processing colour filter paints (= colour resists), or for the production of colour filters for liquid-crystal displays, liquid-crystal screens, colour resolution devices, sensors, plasma screens, displays based on SED or for MLCC.

13. Paints, pastes or moulding compounds containing at least one comb copolymer or mixture thereof with at least one further comb copolymer according to one of claims 1 to 4 or obtainable according to one of claims 5 to 9 as wetting and dispersing agent, at least one solid, preferably a pigment, possibly an organic or aqueous medium, possibly at least one binder and/or possibly further usual auxiliary substances, preferably at least one further usual wetting and dispersing agent.

14. A pigment, the surface of which is modified with at least one comb copolymer or mixture thereof with at least one further comb copolymer according to one of claims 1 to 4 or obtainable according to one of claims 5 to 9.

## Revendications

1. Copolymère à peigne basé sur un copolymère de styrène le cas échéant substitué/anhydride de l'acide maléique contenant les combinaisons indiquées ci-dessous des unités de structure suivantes I à X : 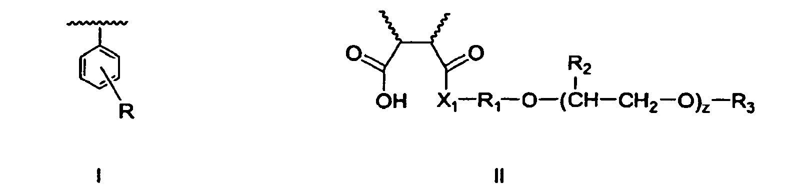 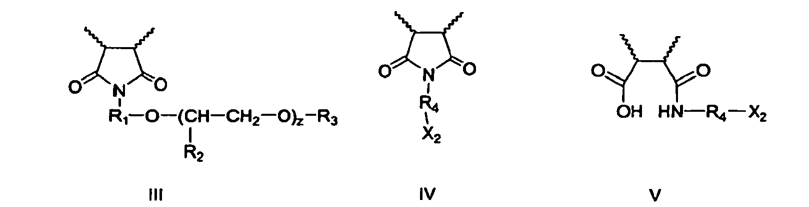 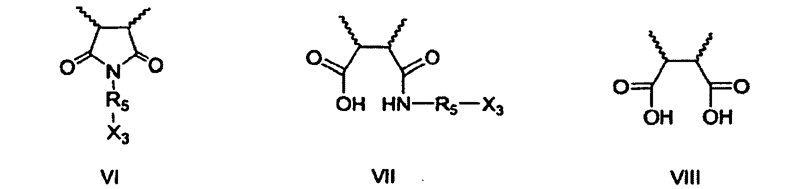 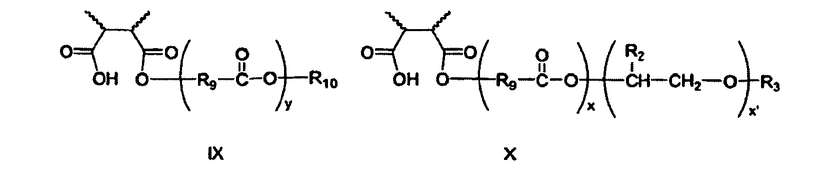 où
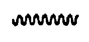 représente la liaison de la chaîne,
R représente H, halogène, de préférence chlore, un groupe nitro, un groupe alkyle comprenant 1 à 15 atomes de carbone ou un groupe aryle comprenant 6 à 18 atomes de carbone,
R₁ représente un groupe alkylène comprenant 1 à 24 atomes de carbone ou un groupe arylène substitué ou non substitué comprenant 6 à 18 atomes de carbone,
R₂ représente H ou un groupe alkyle, où 0 à 95%, de préférence 30 à 70% des radicaux R₂ ont la signification d'un groupe alkyle,
z vaut un nombre entier de 3 à 70,
X₁ représente NH et/ou O,
R₃ représente un groupe alkyle le cas échéant substitué, le cas échéant monoinsaturé ou polyinsaturé comprenant 1 à 30 atomes de carbone, un groupe aryle le cas échéant substitué comprenant 6 à 18 atomes de carbone, un groupe cycloalkyle le cas échéant substitué comprenant 4 à 10 atomes de carbone,
R₄ et R₅ sont identiques ou différents et représentent un groupe alkylène le cas échéant substitué comprenant 1 à 15 atomes de carbone, un groupe cycloalkylène le cas échéant substitué comprenant 4 à 10 atomes de carbone ou un groupe arylène substitué ou non substitué comprenant 6 à 18 atomes de carbone,
X₂ représente un groupe ester d'acide phosphorique ou un groupe hydroxyle, où au moins 25% de X₂ représentent un groupe ester d'acide phosphorique,
X₃ représente un groupe amino N,N-disubstitué de formule générale A, 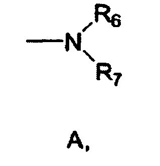 ou un groupe ammonium quaternaire de formule générale B, 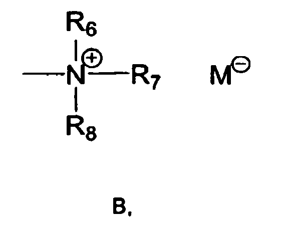 où
M^{Θ} représente un radical acide carboxylique, qui n'est pas éthyléniquement insaturé, un radical sulfate ou un halogénure, de préférence un chlorure, un bromure ou un iodure,
R₆, R₇, R₈ sont identiques ou différents et représentent un groupe alkyle comprenant 1 à 15 atomes de carbone, un groupe cycloalkyle comprenant 6 à 10 atomes de carbone ou un groupe aryle substitué ou non substitué comprenant 6 à 18 atomes de carbone, de préférence un groupe méthyle, éthyle et/ou benzyle,
où
au moins 25% des radicaux X₃ représentent un groupe ammonium quaternaire de formule générale B
et
R₉ représente un groupe alkylène le cas échéant substitué comprenant 2 à 15 atomes de carbone, un groupe cycloalkylène le cas échéant substitué comprenant 6 à 10 atomes de carbone et/ou un groupe arylène le cas échéant substitué comprenant 6 à 18 atomes de carbone,
R₁₀ représente un groupe alkyle le cas échéant substitué comprenant 1 à 30 atomes de carbone, qui peut le cas échéant être monoinsaturé ou polyinsaturé et/ou un groupe aryle le cas échéant substitué,
x vaut un nombre entier de 1 à 70,
x' vaut un nombre entier de 3 à 70,
y vaut un nombre entier de 1 à 70,
où le copolymère à peigne présente
soit une 1ère combinaison des unités de structure I à V et VIII, où X₁ dans l'unité de structure II ne représente qu'un groupe NH,
soit une 2ème combinaison des unités de structure I à III et VI à VIII,
soit une 3ème combinaison des unités de structure I à III et VI à VIII et l'unité de structure IX et/ou X,
et se trouve le cas échéant en mélange avec au moins un autre copolymère à peigne à base d'une structure de copolymère à blocs AB constitué par un bloc A, qui est construit à partir de styrène le cas échéant substitué et d'anhydride de l'acide maléique, et au moins un bloc B, qui est construit à partir de styrène le cas échéant substitué et/ou de monomères de (méth)acrylate et dont les groupes anhydride d'acide maléique se trouvent à raison d'au moins 70% sous forme d'unités de structure dans une des combinaisons suivantes :
une 4ème combinaison des unités de structure II à V et VIII, où X₁ dans l'unité de structure II ne représente qu'un groupe NH,
une 5ème combinaison des unités de structure II à III et VI à VIII, ou
une 6ème combinaison des unités de structure II à III et VI à VIII et l'unité de structure IX et/ou X.

2. Copolymère à peigne ou son mélange avec au moins un autre copolymère à peigne selon la revendication 1, **caractérisé en ce que**
R représente H,
R₁ représente un groupe alkylène comprenant 1 à 6 atomes de carbone,
R₂ représente H ou CH₃,
où le rapport molaire d'unités d'oxyde d'éthylène à unités d'oxyde de propylène dans l'unité de structure II et l'unité de structure III se situe dans la plage de 30:70 à 70:30,
X₂ représente à raison d'au moins 50% un groupe ester d'acide phosphorique,
R₃ représente un groupe alkyle comprenant 1 à 8 atomes de carbone ou un groupe aryle le cas échéant substitué comprenant 6 atomes de carbone,
R₄ représente un groupe alkylène comprenant 1 à 8 atomes de carbone,
R₅ représente un groupe alkylène comprenant 1 à 8 atomes de carbone,
X₃ se trouve à raison de jusqu'à 100% sous forme d'un radical de formule générale B
R₆, R₇, R₈ sont identiques ou différents et représentent un groupe alkyle le cas échéant substitué comprenant 1 à 8 atomes de carbone, de préférence un radical méthyle, éthyle ou benzyle,
R₉ représente un groupe alkylène le cas échéant substitué comprenant 3 à 8 atomes de carbone,
R₁₀ représente un radical alkyle comprenant 4 à 20 atomes de carbone,
z vaut un nombre entier de 5 à 60,
y vaut un nombre entier de 2 à 60,
x vaut un nombre entier de 2 à 60,
x' vaut un nombre entier de 5 à 60,
où le rapport molaire des unités de structure II, III et IX et/ou X aux unités de structure VI et VII est de 25:75 à 75:25.

3. Copolymère à peigne ou son mélange avec au moins un autre copolymère à peigne selon la revendication 1 ou 2, **caractérisé en ce que** le rapport molaire de l'unité de structure I à la totalité des autres unités de structure se trouvant dans la 1ère à la 3ème combinaison du copolymère à peigne ou à la totalité des unités des autres unités de structure se trouvant dans la 4ème à la 6ème combinaison de l'autre copolymère à peigne est de 1:1 à 8:1, de préférence de 1:1 à 2:1.

4. Copolymère à peigne ou son mélange avec au moins un autre copolymère à peigne selon l'une quelconque des revendications, **caractérisé en ce que** dans les unités de structure I à X
R = H,
R₁ représente un radical éthylène, propylène et/ou isopropylène,
R₂ représente H ou un radical CH₃, où le rapport molaire des unités d'oxyde d'éthylène aux unités d'oxyde de propylène est de 70:30 à 30:70,
R₃ représente un radical CH₃ ou C₄H₉,
z vaut un nombre entier de 25 à 50,
X₁ représente NH et/ou O
R₄, R₅ sont identiques ou différents et représentent un radical alkyle comprenant 2-4 atomes de carbone,
R₆, R₇, R₈ sont identiques ou différents et représentent un radical CH₃, C₂H₅ ou benzyle avec M^{Θ} représentant chlorure ou bromure,
R₉ représente un radical alkylène comprenant 4 et/ou 5 atomes de carbone,
R₁₀ représente un radical alkyle comprenant 4-14 atomes de carbone ;
x vaut un nombre entier de 4 à 30,
x' vaut un nombre entier de 25 à 50 et
y vaut un nombre entier de 4 à 30.

5. Copolymère à peigne ou son mélange avec au moins un autre copolymère à peigne pouvant être obtenu par
a) transformation d'au moins un copolymère de styrène le cas échéant substitué/anhydride d'acide maléique (résine SMA), le cas échéant en mélange avec au moins un autre copolymère à base d'une structure de copolymère à blocs AB constitué par un bloc A, qui est construit à partir de styrène le cas échéant substitué et d'anhydride de l'acide maléique, et un bloc B, qui est construit à partir de styrène le cas échéant substitué et/ou de monomères de (méth)acrylate,
avec
a1) un mélange d'au moins une poly(oxyde d'alkylène)monoamine présentant un groupe terminal amino primaire et d'au moins un aminoalcool
ou
a2) un mélange d'au moins une poly(oxyde d'alkylène)monoamine présentant un groupe terminal amino primaire et d'au moins une diamine N,N-disubstituée ou
a3) un mélange a2) et au moins un polymère choisi dans le groupe constitué par les poly(oxydes d'alkylène) terminés par monohydroxy, les polyesters terminés par monohydroxy et les copolymères à blocs de polyester-poly(oxyde d'alkylène) terminés par monohydroxy, et
b) transformation consécutive, au moins partielle
b1) des groupes hydroxyle libres du copolymère à peigne obtenu selon a1) ou du mélange de copolymères à peigne en groupes ester d'acide phosphorique ou
b2) des groupes amino libres N,N-disubstitués des copolymères à peigne ou des mélanges de copolymères à peigne obtenus selon a2) ou a3) avec au moins un composé d'alkylation en groupes ammonium quaternaire.

6. Copolymère à peigne ou son mélange avec au moins un autre copolymère à peigne pouvant être obtenu selon la revendication 5, **caractérisé en ce qu'**à chaque fois avant la transformation selon a) la résine SMA ou son mélange avec au moins un autre copolymère, à base d'une structure de copolymères à blocs AB, se trouve sous forme dissoute dans un solvant organique.

7. Copolymère à peigne ou son mélange avec au moins un autre copolymère à peigne pouvant être obtenu selon la revendication 5 ou 6, **caractérisé en ce que** la transformation selon a) est réalisée à une température de 20°C à 200°C, de préférence de 30°C à 170°C.

8. Copolymère à peigne ou son mélange avec au moins un autre copolymère à peigne pouvant être obtenu selon l'une quelconque des revendications 5 à 7, **caractérisé en ce qu'**à chaque fois, lors de la transformation selon a1), a2) ou, selon le cas, a3) le rapport molaire du composant poly(oxyde d'alkylène)monoamine au composant aminoalcool ou, selon le cas, au composant diamine N,N-disubstituée ou, selon le cas, du composant poly(oxyde d'alkylène)monoamine et du composant copolymère à blocs de poly(oxyde d'alkylène) terminé par monohydroxy, polyester terminé par monohydroxy et/ou polyester-poly(oxyde d'alkylène) terminé par monohydroxy au composant diamine N,N-disubstituée se trouve dans la plage de 25:75 à 75:25, de préférence de 40:60 à 60:40.

9. Copolymère à peigne ou son mélange avec au moins un autre copolymère à peigne pouvant être obtenu selon l'une quelconque des revendications 5 à 8, **caractérisé en ce que** le degré de transformation lors de la transformation selon b1) ou, selon le cas, b2) est d'au moins 25%, de préférence d'au moins 50%.

10. Utilisation d'au moins un copolymère à peigne ou son mélange avec au moins un autre copolymère à peigne selon l'une quelconque des revendications 1 à 4 ou pouvant être obtenu selon l'une quelconque des revendications 5 à 9 comme agent mouillant et dispersant le cas échéant en mélange avec au moins un autre agent mouillant et dispersant usuel et le cas échéant avec utilisation conjointe d'adjuvants usuels, de préférence de liants usuels.

11. Utilisation selon la revendication 10 pour des solides, de préférence des pigments et/ou des charges.

12. Utilisation selon la revendication 10 ou 11 lors de la préparation et/ou de la transformation de concentrats solides, de préférence des concentrats de pigments ou des pâtes, ou lors de la préparation et/ou de la transformation de laques, d'encres d'imprimerie, d'encres pour procédés par jet d'encre, de couchages pour papier, de teintures pour cuir et/ou textiles, de céramiques, de préparations cosmétiques, ou lors de la préparation et/ou de la transformation de masses coulées et/ou masses de moulage à base de polymères synthétiques, semi-synthétiques ou naturels, ou lors de la préparation et/ou de la transformation de laques formant un filtre couleur (= Color Resists), ou lors de la préparation de filtres couleur pour affichages à cristaux liquides, écrans à cristaux liquides, appareils de résolution de couleur, capteurs, écrans plasma, affichages à base de SED (surface-conduction electron emitter - émetteur d'électrons par conduction de surface) ou pour MLCC (multilayer ceramic compounds - composites céramiques multicouches).

13. Laques, pâtes ou masses de moulage contenant au moins un copolymère à peigne ou son mélange avec au moins un autre copolymère à peigne selon l'une quelconque des revendications 1 à 4 ou pouvant être obtenu selon l'une quelconque des revendications 5 à 9 comme agent mouillant et dispersant, au moins un solide, de préférence un pigment, le cas échéant un milieu organique ou aqueux, le cas échéant au moins un liant et/ou le cas échéant d'autres adjuvants usuels, de préférence au moins un autre agent mouillant et dispersant usuel.

14. Pigment dont la surface est modifiée avec au moins un copolymère à peigne ou son mélange avec au moins un autre copolymère à peigne selon l'une quelconque des revendications 1 à 4 ou pouvant être obtenu selon l'une quelconque des revendications 5 à 9.
